# EUROPEAN PATENT SPECIFICATION

(11) **EP 4 254 185 B1**
(45) Date of publication and mention of the grant of the patent: **04.11.2026**
(21) Application number: 23152389.5
(22) Date of filing: 19.01.2023
(51) Int. Cl.: G06F 9/48

(54) **PROCESSING ENGINE SCHEDULING FOR TIME-SPACE PARTITIONED PROCESSING SYSTEMS**
VERARBEITUNGSMASCHINENPLANUNG FÜR ZEITRAUMPARTITIONIERTE VERARBEITUNGSSYSTEME
PLANIFICATION DE MOTEUR DE TRAITEMENT POUR SYSTÈMES DE TRAITEMENT PARTITIONNÉS EN ESPACE TEMPOREL

(30) Priority: 28.03.2022 US 202217705959
(43) Date of publication of application: 04.10.2023
(73) Proprietor: Honeywell International s.r.o, 148 00 Chodov (CZ)
(72) Inventor: ZAYKOV, Pavel, Charlotte, 28202 (US); MILLER, Larry James, Charlotte, 28202 (US); CARVALHO, Humberto, Charlotte, 28202 (US); VARADARAJAN, Srivatsan, Charlotte, 28202 (US)
(74) Representative: Haseltine Lake Kempner LLP

(56) References cited:
- WO-A1-2019/231539
- US-A1- 2013 191 612
- KANG WOOSUNG ET AL: "LaLaRAND: Flexible Layer-by-Layer CPU/GPU Scheduling for Real-Time DNN Tasks", 2021 IEEE REAL-TIME SYSTEMS SYMPOSIUM (RTSS), IEEE, 7 December 2021 (2021-12-07), pages 329 - 341, XP034125035, ISSN: 2576-3172, ISBN: 978-1-6654-2802-6, [retrieved on 20211207], DOI: 10.1109/RTSS52674.2021.00038

## Description

### BACKGROUND

Real-time processing in dynamic environments requires processing large sums of data in very short timeframes. Depending on the particular context, such processing may involve computing iterative mathematical calculations or performing intensive data analysis. Fast and accurate data output is important for avoiding processing delays, which is especially imperative for safety-critical or mission-critical applications, such as those used in avionics.

Some real-time operating systems utilize a time and/or space partitioning process for processing data. Initially, tasks are executed at a main processor (referred to herein as a "central processing unit" or "CPU") according to instructions from an application. The CPU is generally responsible for directing the execution of tasks along with managing data output as the CPU executes the task. Much of the raw data processing for the tasks received at the CPU is performed by a coprocessor distinct from the CPU. When the CPU executes tasks, it can assign workloads associated with the task to the coprocessor for processing. A "workload" is also referred to herein as a "job," "kernel," or "shader" for specific applications. A task executed by the CPU may require processing that could be more quickly executed on a coprocessor, so the CPU can send one or more requests that define the workloads that the coprocessor must execute to complete the task executed by the CPU. These requests are referred to herein as "workload launch requests."

A coprocessor typically receives many such requests, sometimes over a short period of time. Each request may involve a very large number of intensive calculations. The ability to process workload launch requests in a timely manner depends not only on the processing capabilities of the coprocessor, but how the coprocessor is utilized to execute work requested by the main processor. While coprocessors with powerful processing resources can process these requests quickly, they can be expensive to implement with no guarantee that the coprocessor is capable to process tasks with substantial processing requirements in a short timeframe. Less advanced coprocessors with limited processing resources are prone to processing delays associated with insufficient bandwidth to process additional requests and may lead to loss of guarantees to determinism. In any case, the coprocessor becomes overwhelmed with backed up workload launch requests.

Some coprocessors enable time and/or space partitioning of its processing resources so that multiple jobs can be executed in parallel. However, conventional coprocessors do not provide sufficient spatial isolation, time determinism, and responsiveness to execute multiple safety-critical applications simultaneously. Failure to timely process safety-critical applications can ultimately lead to loss of guarantees to determinism.

Document WO2019/231539 discloses Systems, apparatuses, and methods for implementing a multi-kernel wavefront scheduler.

Document US2013/191612 discloses Systems and methods that share coprocessor resources between two or more applications in a computing cluster.

### SUMMARY

The details of one or more embodiments are set forth in the description below. The features illustrated or described in connection with one exemplary embodiment may be combined with the features of other embodiments. Thus, any of the various embodiments described herein can be combined to provide further embodiments. Aspects of the embodiments can be modified, if necessary to employ concepts of the various patents, applications and publications as identified herein to provide yet further embodiments.

In one embodiment, a processing system is disclosed. The processing system comprises a processor and a coprocessor configured to implement a processing engine. The processing system further comprises a processing engine scheduler configured to schedule workloads for execution on the coprocessor. The processing engine scheduler is configured to receive one or more workload launch requests from one or more tasks executing on the processor. In response, the processing engine scheduler is configured to generate at least one launch request for submission to the coprocessor based on a coprocessor scheduling policy. Based on the coprocessor scheduling policy, the processing engine scheduler selects which coprocessor clusters are activated to execute workloads identified by a queue based on the at least one launch request. The coprocessor scheduling policy defines at least: tightly-coupled coprocessor scheduling where workloads identified by the at least one launch request are scheduled to immediately execute on the coprocessor within time of a timing window in which the one or more tasks are being executed on the processor.

In another embodiment, a method is disclosed. The method comprises receiving one or more workload launch requests from one or more tasks executing on a processor. The one or more workload launch requests include one or more workloads configured for execution on a coprocessor. The method comprises generating at least one launch request in response to the one or more workload launch requests based on a coprocessor scheduling policy. The method comprises scheduling one or more workloads identified in the at least one launch request for execution on the coprocessor based on the coprocessor scheduling policy by at least: a tightly-coupled coprocessor scheduling where workloads identified by the at least one launch request are scheduled to immediately execute on the coprocessor within time of a timing window in which the one or more tasks are being executed on the processor.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:
Figures 1A-1B depict block diagrams illustrating exemplary systems configured to schedule and assign launch requests to a coprocessor;
Figures 2A-2B depict block diagrams of scheduling and assigning workload(s) associated with one or more queues to clusters of a coprocessor;
Figure 3 depicts a diagram of scheduling workload(s) to multiple clusters of a coprocessor in a loosely-coupled coprocessor scheme, according to an embodiment;
Figures 4A-4B depict diagrams of scheduling workload(s) to multiple clusters of a coprocessor in a tightly-coupled coprocessor scheme;
Figures 5A-5B depict diagrams of synchronizing inference processing between a CPU and one or more clusters of a coprocessor;
Figures 6A-6B depict diagrams of preemption policies applied to workload(s) scheduled to a graphics processing unit (GPU);
Figure 7 depicts a flow diagram illustrating an exemplary method for scheduling workload(s) for execution to a coprocessor;
Figures 8A-8B depict diagrams of data coupling between multiple clusters of a coprocessor;
Figure 9 depicts a diagram of coprocessor assignment policies applied to multiple clusters of a coprocessor, according to an embodiment;
Figures 10A-10C depict block diagrams illustrating exemplary systems configured to assign workload(s) to multiple clusters of a coprocessor;
Figure 11 depicts a flow diagram illustrating an exemplary method for assigning workload(s) to processing resources of a coprocessor;
Figure 12 depicts a flow diagram illustrating an exemplary method for managing processing resources when executing workload(s) on a coprocessor;
Figure 13 depicts a flow diagram illustrating an exemplary method for prioritizing workload(s) in a context; and
Figures 14A-14C depict flow diagrams illustrating an exemplary method for scheduling and assigning workloads.

**In** accordance with common practice, the various described features are not drawn to scale but are drawn to emphasize specific features relevant to the exemplary embodiments.

### DETAILED DESCRIPTION

**In** the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

Embodiments of the present disclosure provide improvements to scheduling and assignment of workload(s) to a coprocessor (for example, a GPU) for execution. Some embodiments disclosed herein enable workload(s) to be scheduled to a GPU based on a timing window of the CPU so that the GPU is at least partially synchronized with the CPU. Other embodiments enable a GPU to dynamically assign workload(s) to optimize use of the processing resources on the GPU. Workloads may be pedagogically referred to herein in the singular "workload" or plural "workloads" understanding that the description applies to either a single workload or multiple workloads unless otherwise stated.

While some examples are illustrated and described for specifically scheduling and assigning workloads to a GPU, the examples described herein are also applicable in the context of other systems. For example, such techniques are also applicable to any processing system having one or more processors that schedules and assigns workloads to one or more coprocessors. The coprocessor can generally be implemented as an integrated or discrete processing unit in a processing system. In various examples, the coprocessor can be implemented as a graphical processing unit ("GPU"), a neural processing unit ("NPU"), a data processing unit ("DPU"), an application-specific integrated circuit (ASIC), a field programmable gate array (FPGA), and other processing circuitry, or a combination thereof.

The coprocessor may accelerate workload processing using traditional execution or by artificial intelligence facilitated execution. For AI-based modeling, the coprocessor is used to accelerate execution of some of the workloads associated with a machine learning (ML)/artificial intelligence (AI) application. Additionally, the coprocessor can be used to accelerate execution of a ML/AI application with an inference engine, which can be utilized for deep neural network (DNN) processing, for example. In various figures and description that follows, the coprocessor is implemented as a GPU for pedagogical explanation.

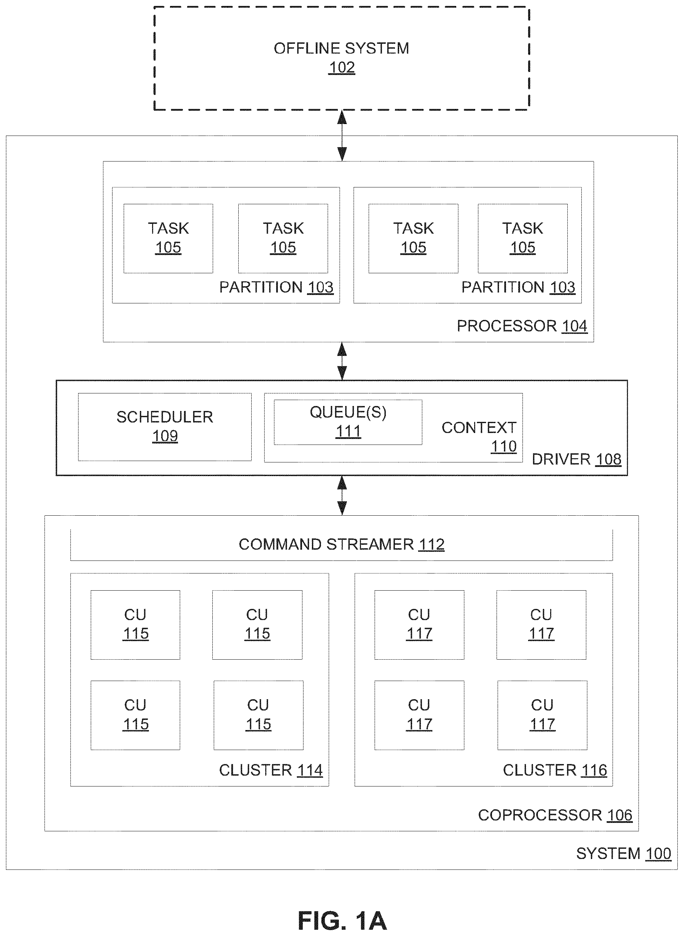

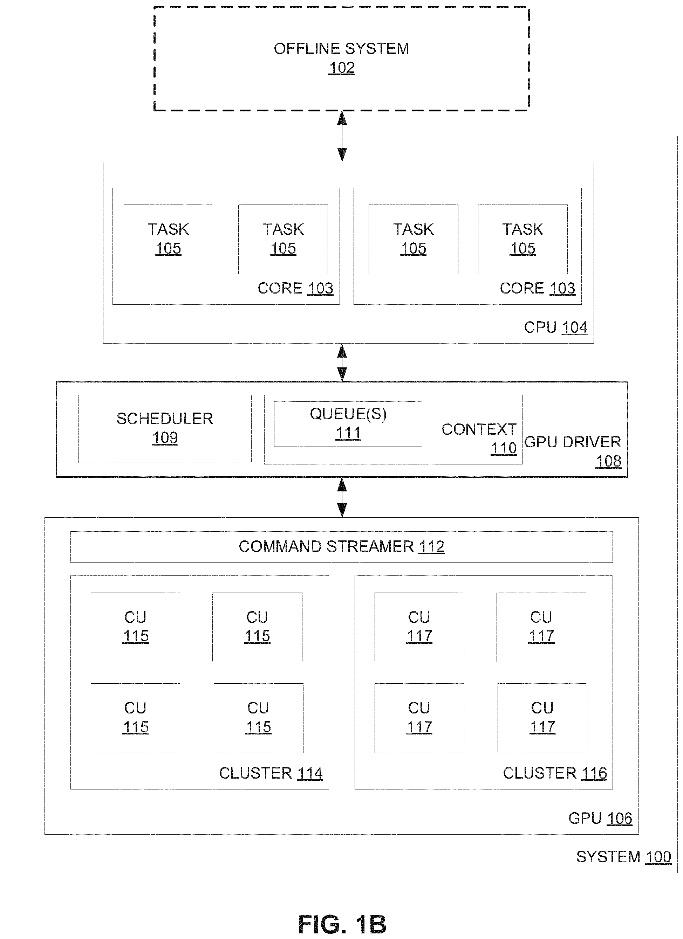

Figure 1A depicts a block diagram illustrating an exemplary system 100 configured to schedule and assign workload(s) to a coprocessor. The system 100 in some examples implements a real-time operating system (RTOS) that facilitates the execution of real-time applications to process data as it comes in within specified time constraints. System 100 includes a processor 104 coupled to one or more coprocessors 106. Only one processor 104 and one coprocessor 106 are explicitly shown in Figure 1, but it should be understood that any number of processors 104 can be coupled to one or more coprocessors 106.

Processor 104 is configured to receive system parameters from an offline system 102 (for example, from a stored system configuration), including a coprocessor scheduling policy that determines when workloads are assigned to the coprocessor 106 and a coprocessor assignment policy that determines where workloads are assigned to processing resources of the coprocessor 106. Processor 104 is also configured to execute tasks 105 received from one or more applications (safety-critical applications, best-effort applications, *etc*.) running on processing resources (processors, processing circuitry) of processor 104 (not shown in Figure 1A). Tasks 105 executed on processor 104 may require processing that utilizes processing resources on coprocessor 106. In one example, the processor is configured to, when executing a given task 105, prepare one or more workload launch requests with workload(s) requiring data processing (for example, DNN processing including mathematical computations such as matrix-operations and the like) with the coprocessor 106. Other types of processing may also be required by the task 105, including but not limited to, rendering and/or compute processing. In various examples, the workloads are represented as "kernels," "jobs," "threads," "shaders," or other units of processing. As tasks 105 are processed by processor 104, coprocessor 106 also processes the workload launch requests to launch and execute workloads associated with the tasks 105 in parallel with processor 104. A workload launch request includes the sequence of workloads (for example, kernels) required for processing, along with other workload parameters such as the input and output data arrays, workload code, the processing load necessary to complete the workload(s), priority of the workload(s) included in the launch request, and/or other parameters.

Processor 104 may include one or more partitions 103. Each partition 103 functions as an independent processing system (for example, a processing core 103 as shown in Figure 1B) and is configured to execute one or more of the tasks 105. Partitions 103 can be partitioned in time and/or space. Time and space partitioning can be achieved by conventional physical ("hard") partitioning techniques that separate the hardware circuitry in processor 104 or by software methods (virtualization technology, for example) that set processing constraints performed by the processor 104. When spatially partitioned via software, the partitions 103 do not contaminate the storage areas for the code, input/output (I/O) or data of another partition 103, and each partition consumes no more than its respective allocation of shared processing resources. Furthermore, a fault attributable to hardware for one software partition does not adversely affect the performance of a software partition. Time partitioning is achieved when, as a result of mitigating the time interference between partitions hosted on different cores, no software partition consumes more than its allocation of execution time on the processing core(s) on which it executes, irrespective of whether partitions are executing on none of the other active cores or on all of the other active cores. For a partitioned processor, such as processor 104 shown in Figure 1, one or more of the tasks 105 are executed on a first partition 103, thereby enabling for concurrent processing for at least some of the tasks 105 assigned to different partitions 103. Processor 104 can include any number of partitions 103. In some examples, partitions 103 are physically or virtually isolated from each other to prevent fault propagation from one partition to another.

Each coprocessor 106 coupled to one or more processors 104 is configured to receive at least some of the processing offloaded by the processors 104. System 100 includes a driver 108 including a processing engine scheduler (also referred to as "scheduler") 109 and one or more contexts 110. The context 110 includes hardware configured to provide spatial isolation. Multiple contexts 110 enable execution of multiple partitions on the coprocessor in parallel to support time and/or space partitioning.

For artificial intelligence processing models such as a neural network, the scheduler 109 can be an inference engine scheduler that utilizes inference processing to schedule workloads for execution on the coprocessor 106. The driver 108 and coprocessor 106 can utilize multiple types of processing, including computing and rendering. In one example where system 100 is a RTOS, the driver 108 resides in the processor 104 and schedules workloads for execution based on the processing resources of the coprocessor 106. In another example, the driver 108 is implemented by software that is exclusively accessible by a server application to which one or multiple client applications are submitting workloads. The server generally would retain exclusive access to the driver 108 and utilizes the driver 108 to schedule workloads on the coprocessor 106 when it receives workload launch requests from tasks 105 executed on the processor 104. As shown in Figure 1A, driver 108 is implemented as an independent unit, although in other examples (such as those previously described), the driver 108 is implemented by, or otherwise part of, the coprocessor 106 or processor 104.

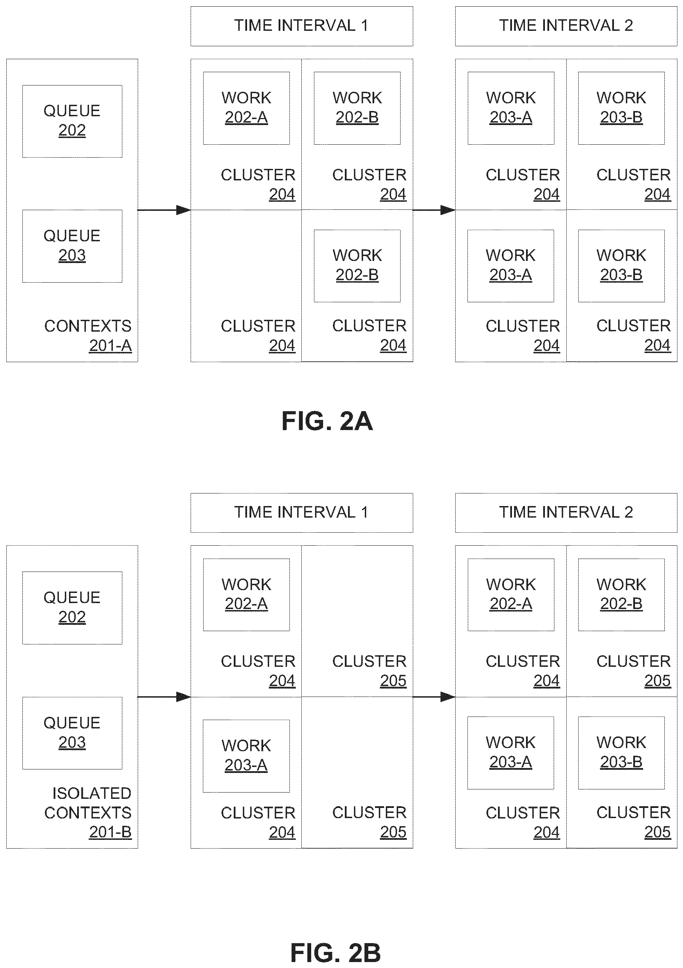

The scheduler 109 of the driver 108 is configured to dispatch workloads associated with the tasks 105 executed by processor 104 to compute units 115, 117, and in some examples, dispatches workloads based on a timing window of the processor 104. Scheduler 109 is configured to receive the workload launch requests from processor 104 and to schedule workloads for execution on the coprocessor 106. In some examples, scheduler 109 is configured to generate at least one launch request from the workload launch requests based on a scheduling policy. Some examples of scheduling policies are described further with respect to Figures 2-7.

For each launch request generated by scheduler 109, one or more contexts 110 include the workloads that will be scheduled and assigned to the processing resources of the coprocessor for execution. Context 110 also includes one or more queues 111 that categorize the workloads identified from the one or more launch requests. The launch requests in each queue 111 can be queued and scheduled or assigned in sequence based on the priority of the queue 111 relative to other queues organized by context 110. In some examples, the queues 111 are stored in a run-list that lists the priority of each queue. Also, driver 108 can include any number of contexts 110, and each context 110 can include any number of queues 111. In some examples, workload launch requests in different queue can be executed in parallel or in different orders provided that workloads in the queue are isolated from each other during processing.

Coprocessor 106 further includes one or more command streamers 112 configured to schedule and assign the workload(s) identified by the launch requests according to the coprocessor scheduling policy and coprocessor assignment policy to available clusters 114 and/or 116. Coprocessor 106 can include any number of command streamers 112, and in some examples, one or more command streamers 112 are shared between queues 111 and/or hosted by a dedicated context 110. Each cluster 114, 116 includes a set of respective compute units 115, 117 configured to perform data processing. In some examples, the clusters 114, 116 are statically configured (*e.g.,* hardwired) in the coprocessor 106 in which the compute units 115 are permanently associated with cluster 114 and compute units 117 are permanently associated with cluster 116. Clusters 114, 116 are configured to execute processing associated with one or more of the workloads associated with each queue 111 when a queue is assigned to the respective cluster by command streamer 112.

A "compute unit" as used herein refers to a processing resource of a cluster. Each compute unit 115, 117, can comprise one processing core (otherwise referred to as a "single-core processing unit") or multiple processing cores (otherwise referred to as a "multi-core processing unit") as presented to scheduler 109 for executing workloads. Cores can be either physical or virtual cores. Physical cores include hardware (for example, processing circuitry) forming the core that physically processes an assigned workload. However, virtual cores can also be presented to scheduler 109 for processing workloads with each virtual core being implemented using the underlying physical cores.

Processor 104 and coprocessor 106 generally includes a combination of processors, microprocessors, digital signal processors, application specific integrated circuits, field programmable gate arrays, and/or other similar variants thereof. Processor 104 and coprocessor 106 may also include, or function with, software programs, firmware, or other computer readable instructions for carrying out various process tasks, calculations, and control functions, used in the methods described below. These instructions are typically tangibly embodied on any storage media (or computer readable media) used for storage of computer readable instructions or data structures.

Data from workload execution along with other information can be stored in a memory (not shown in Figure 1). The memory can include any available storage media (or computer readable medium) that can be accessed by a general purpose or special purpose computer or processor, or any programmable logic device. Suitable computer readable media may include storage or memory media such as semiconductor, magnetic, and/or optical media, and may be embodied as storing instructions in non-transitory computer readable media, such as cache, random access memory (RAM), read-only memory (ROM), non-volatile RAM, electrically-erasable programmable ROM, flash memory, or other storage media. For example, in examples where workloads currently executed by the clusters 114, 116 become preempted by higher priority workloads, the progress of execution prior to preemption is stored in the memory and accessible during a later time period (*e.g.,* when the preempted workloads finish execution) for rescheduling by the command streamer 112. Additionally, the memory is configured to store the applications including the tasks executed by processor 104.

Figure 1B depicts an exemplary embodiment of a particular example of the system described in Figure 1A. The same reference numerals used in Figure 1B refer to specific examples of the components used in Figure 1A. In Figure 1B, system 100 includes CPU 104 coupled to a GPU driver 108 in communication with a GPU 106. CPU 104 is configured as the processor 104, GPU driver 108 is configured as the driver 108, and GPU 106 is configured as the coprocessor 106 as described in Figure 1A. All other components of the CPU 104, GPU driver 108, and GPU 106 function similarly as described in Figure 1A.

Figures 2A-2B illustrate assigning queues to clusters of a coprocessor in accordance with the scheduling and/or assignment techniques described herein and as described in Figures 1A-1B. Figure 2A illustrates workload assignment in a temporal (time-partitioned) isolation coupling configuration. Figure 2B in contrast illustrates workload assignment in a spatial isolation coupling configuration.

Referring to Figure 2A, one or more contexts 201-A include queue 202 and queue 203, with each queue including one or more workloads (WORK) to be processed by the coprocessor. More specifically, queue 202 includes workload 202-A and workload 202-B, while queue 203 includes workload 203-A and workload 203-B. In one example of the temporal assignment shown in Figure 2A, only one queue can be executed at a given time to achieve temporal isolation between queue 202 and queue 203. Accordingly, queue 202 and queue 203 are executed in sequence. In some examples, queues are assigned based on an order of priority, with queue 202 given higher priority (and hence executed first on the coprocessor), followed by queue 203. However, workloads associated with a single queue can be executed concurrently on one or more available clusters 204 of the coprocessor.

In the example shown in Figure 2A, at a first time interval (time interval 1 shown in Figure 2A), workload 202-A and workload 202-B are assigned to available clusters 204 for processing. While workload 202-A and workload 202-B of queue 202 undergo execution by clusters 204, queue 203 is queued next in the contexts 201-A. Once all the workloads associated with queue 202 have finished execution (or in some examples, are preempted), at a subsequent time interval (time interval 2 shown in Figure 2A), workload 203-A and workload 203-B associated with queue 203 are assigned to the available clusters 204 for execution. This workload assignment is iteratively repeated as contexts 201-A receive additional queues from driver 108.

In contrast, Figure 2B illustrates an example of a spatially-isolated execution system in which multiple distinct queues 202 and 203 can be concurrently executed while maintaining sufficient isolation between the queues. Specifically, queues 202 and 203 are queued in isolated contexts 201-B. This configuration enables workload 202-A of queue 202 and workload 203-A of queue 203 to be simultaneously executed on clusters 204 in time interval 1. Similarly, at time interval 2, workload 202-B of queue 202 and workload 203-B of queue 203 can be loaded on clusters 205 as workload 202-A and workload 203-A are being processed. In some examples, clusters 204 (or a coprocessor partition that includes clusters 204) is associated with queue 202 and clusters 205 (or a coprocessor partition that includes clusters 205) is associated with queue 203.

As described in further detail below, in some examples driver 108 is configured to schedule workload(s) in accordance with a coprocessor scheduling policy so that the coprocessor is at least partially synchronized with the processor. In other examples, driver 108 is configured to assign workloads to processing resources of the coprocessor in accordance with a coprocessor assignment policy to optimize use of the processing resources on the coprocessor. Both the scheduling policy and the assignment policy can include a policy governing preemption of workloads based on the priority of the workloads. Although described separately for pedagogical explanation, the workload scheduling, workload assignment, and workload preemption techniques can be utilized in combination.

### Coprocessor Scheduling Policies

As previously described with respect to Figures 1A-1B, in some examples, scheduler 109 of the driver 108 is configured to implement a coprocessor scheduling policy that schedules workloads associated with the tasks 105 for execution by clusters 114, 116 of the coprocessor 106 in accordance with at least one launch request. The scheduling policy defines when workloads will be scheduled for execution on a designated cluster or clusters in coprocessor 106. The examples described with respect to Figures 1A-7 include various exemplary examples of scheduling workloads on a coprocessor such as a GPU.

Still referring to Figure 1A, in one example, the scheduling policy executed by the scheduler 109 of the driver 108 optionally first selects a queue 111 containing the associated workloads that will be scheduled to the clusters 114, 116 for processing. The selection can be triggered by an external event that initializes prioritization of queues to the coprocessor 106. Some events include a common timing event between the processor 104 and coprocessor 106 such as an update, interruption message from the processor 104, or other external events. Selecting a queue 111 before scheduling the workloads received by coprocessor 106 helps to ensure sufficient isolation between multiple queues 111 during execution. In some examples, a queue 111 will have associated processing parameters that are considered by scheduler 109 when determining which queue 111 to select. Exemplary parameters include identifying parameters (for example, the partition ID and/or context ID), the minimum and/or maximum clusters required by the queue and/or workloads within the queue, priority of the queue or workloads assigned *a priori,* budget, preemption parameters, and other parameters. In an example, the budget corresponding to a workload refers to the longest expected time it would take to fully execute the workload plus a safety margin.

At the next stage of the scheduling policy, scheduler 109 selects the workload(s) that will be scheduled for processing to the clusters 114, 116. Similar to the associated partition parameters described above, workload(s) can have associated parameters such as a workload ID, partition ID, priority, budget, cluster requirements, preemption, number of kernels, and other parameters. Once scheduler 109 selects the queue 111 and workloads associated with the selected queue 111, scheduler 109 then generates the one or more launch requests associated with the selected tasks 105 based on the coupling arrangement between processor 104 and coprocessor 106. Depending on the example, the coprocessor 106 may have varying degrees of synchronization with the processor 104. In one example, coprocessor 106 is decoupled from the processor 104 and operates asynchronously to processor 104. Thus, workload launch requests generated by the scheduler 109 are scheduled when clusters 114, 116 become available on the coprocessor 106 according to the priority of the associated workload request. In this coupling arrangement, there is little to any preemption that occurs on workloads already executing on the coprocessor 106.

In another example, the coprocessor 106 shares a loosely-coupled arrangement with processor 104. In this example, coprocessor 106 operates with some degree of synchronization with processor 104. For example, in a loosely-coupled arrangement, coprocessor 106 is synchronized at a data frame boundary with processor 104 and any unserviced workloads executed at the end of the data frame boundary are cleared at the start of a subsequent data frame. Accordingly, both processor 104 and coprocessor 106 will have the same input and output data rate in a loosely-coupled arrangement. However, coprocessor 106 will generally operate asynchronously to processor 104 during timing windows, meaning that partitions and/or tasks executing on processor 104 may execute in parallel with uncorrelated partitions and/or workloads executing on coprocessor 106. Loosely-coupled arrangements can support both preemptive and non-preemptive scheduling between processor 104 and coprocessor 106.

In yet another example, the coprocessor 106 shares a tightly-coupled arrangement with processor 104. In this example, coprocessor 106 operates with a high degree of synchronization with processor 104; that is, coprocessor 106 synchronizes queue and/or workload execution associated with a corresponding task concurrently executed by the processor 104 based on a timing window of the processor 104. Tightly-coupled arrangements can be embodied in various ways. The coprocessor 106 is highly synchronized with processor 104 during the same timing window, or in other words, coprocessor 106 executes workloads associated with one or more tasks currently executed on processor 104 in that timing window. As processor 104 executes another task in a subsequent timing window, coprocessor 106 then executes workloads associated with the next task executed by processor 104. In another implementation, the coprocessor 106 synchronizes with processor 104 for a subsequent timing interval but coprocessor 106 maintains the freedom to execute workloads associated with a different task consistent with other priority rules or processing availability on the coprocessor 106.

Coupling arrangements may also be combined. For example, coprocessor 106 can be loosely-coupled with processor 104 with respect to one timing window, but is tightly-coupled with processor 104 with respect to another timing window. Thus, a scheduling policy may schedule launch requests based on a combination of coupling arrangements between processor 104 and coprocessor 106, and can be dynamically updated as the system scheduling parameters change.

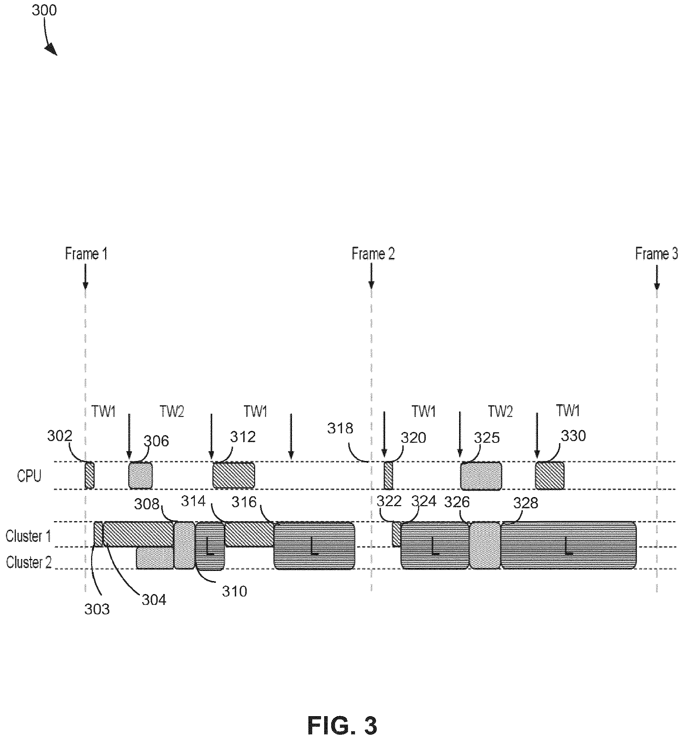

Figure 3 depicts a diagram 300 of scheduling workloads to multiple clusters of a coprocessor (pedagogically described as a GPU) in a loosely-coupled coprocessor scheme. At a first timing window (TW1), CPU 104 receives a new data frame (frame 1) and begins execution of a first CPU task at time 302. CPU 104 then requests an "initializing" workload at time 303 to cluster 1 of the GPU 106 to confirm whether to initiate processing associated with the first CPU task. In some examples, GPU driver 108 determines that processing is not needed for the associated task. For example, if the data frames correspond to different frames of a camera image, GPU driver 108 may determine that processing is not required if the previous image frame is sufficiently similar to the current image frame. GPU 106 executes the "initializing" workload on cluster 1 at time 303 and confirms within timing window 1 that the workload received at time 302 requires processing. Accordingly, cluster 1 of the GPU 106 begins executing workloads associated with the first CPU task at time 304.

While cluster 1 of GPU 106 continues processing workloads from the task executed at time 302, timing window 2 (TW2) begins at time 306 at CPU 104, and CPU 104 begins processing a second task at time 306. While cluster 1 is executing workloads associated with CPU 104, cluster 2 begins executing workloads associated with the next CPU task. At time 308, cluster 1 completes processing of the workloads associated with the first CPU task and begins processing workloads associated with the second CPU task. Hence, at time 308, both clusters 1 and 2 devote processing resources to execute workloads associated with the second CPU task. In this example, the work that was previously executed only on cluster 2 has been scaled-up and now executes on both clusters 1 and 2. Then at time 310, clusters 1 and 2 finish processing the workloads associated with the second CPU task within timing window 2. Because CPU 104 has no additional tasks that require scheduling within timing window 2, clusters 1 and 2 can be allocated for processing a low-priority workload at time 310 if such a workload is available. For highest-priority workloads, driver 108 is configured to prioritize scheduling so that these workloads can begin execution within the earliest available timing window. In contrast, driver 108 is configured to schedule lowest-priority workloads whenever the processing resources become available. That is, the driver 108 makes a "best effort" to schedule low-priority workloads within the earliest available timing window, but such low-priority workloads may not be able to begin or finish execution once scheduled due to being preempted by a higher-priority workload and/or insufficient processing resources to execute the lower-priority workload. In avionics applications, a high-priority workload is associated with a high Design Assurance Level (DAL) (*e.g.,* A-C), while a low-priority workload is associated with a low DAL (*e.g.,* D-E).

At time 312, the timing window changes to timing window 1 and CPU 104 begins executing a third task. In some examples, the timing windows are scheduled in sequence via time division multiplexing. At time 314, GPU driver 108 receives instructions from CPU 104 to begin executing workloads associated with the third CPU task. Since the third CPU task has a higher priority than the low-priority workload being executed by clusters 1 and 2 after time 310, GPU driver 108 halts (or preempts) execution of the low-priority workload at time 314 and schedules workloads associated with the third CPU task to cluster 1 for execution. Cluster 2 optionally remains idle at time 314 as cluster 1 executes workloads. At time 316, cluster 1 finishes executing workloads associated with the third CPU task and both clusters 1 and 2 resume processing a low-priority workload. Timing windows 1 and 2 can alternate as required and may or may not be synchronized with reception of new data frames. GPU 106 can continue to process low-priority workloads as frame 1 is processed until CPU 104 executes another task that requires workload(s) on the GPU 106. The number of timing windows in a data frame can vary and in some examples are designated independently of the coprocessor scheduling policy.

At time 318, CPU 104 receives a new data frame (frame 2). Timing window 1 begins at time 320 shortly after data frame 2 is received, and CPU 104 begins executing a fourth CPU task. At time 322, GPU 106 then executes a workload to determine whether the fourth CPU task requires processing; GPU driver 108 assigns this workload to cluster 1 as shown in Figure 3. As cluster 1 executes the workload, it determines that additional processing is not required for the fourth CPU task, and at time 324 both clusters 1 and 2 begin executing a low-priority workload for the remaining time of timing window 1.

At time 325, CPU 104 executes a fifth CPU task and subsequently sends a workload request for a workload associated with the fifth CPU task to GPU driver 108 at time 326. In this case, the GPU 106 and CPU 104 execute corresponding respective workloads and tasks in parallel, in which the CPU 104 waits for the GPU 106 to "catch up." Hence, the CPU 104 and GPU 106 execute in parallel. The workload associated with the fifth CPU task preempts the low-priority workload previously executing on GPU 106. At time 328, clusters 1 and 2 finish the workload associated with the fifth CPU task and resume processing of a low-priority workload. Finally, at time 330, CPU 104 executes a sixth CPU task at timing window 1 and determines that no additional processing is required to execute the sixth CPU task. Accordingly, GPU 106 continues to process the low-priority workload for the remaining time of timing window 1 until a new data frame (frame 3) is received.

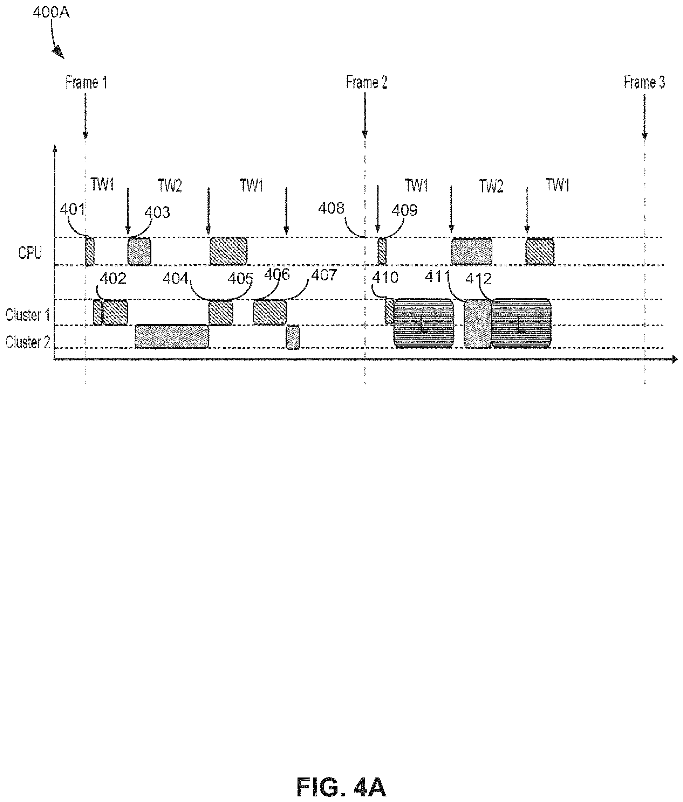

Figures 4A-4B depict diagrams of scheduling workloads to multiple clusters of a GPU in a tightly-coupled coprocessor scheme. Diagram 400A illustrates an example in which the GPU executes workloads associated with a CPU task within the same timing window. Diagram 400B illustrates an example in which the GPU executes workloads associated with a CPU task in a subsequent timing window. Although Figure 4A pedagogically shows a 1:1 correlation between timing windows of a CPU and timing windows of a GPU, in other examples the timing windows of the CPU may be of different duration than timing windows of the GPU. Also, the CPU may have a different number of timing windows than the timing windows of the GPU, and a GPU workload associated with a CPU task may have different execution time requirements.

Referring first to diagram 400A, CPU 104 executes a first CPU task within timing window 1 at time 401. GPU driver 108 subsequently determines that processing is required for the first CPU task and at time 402, GPU driver 108 schedules a workload associated with the first CPU task to cluster 1 for execution. Cluster 1 continues to execute the workload for the remainder of timing window 1, but is unable to finish execution of the workload before timing window 2 begins at time 403. When timing window 2 starts, CPU 104 begins executing a second CPU task that requires processing from GPU 106. The workload processed by cluster 1 during timing window 1 becomes preempted at the timing window 2 boundary. Since in this example GPU 106 is synchronized to CPU 104 at the timing window boundary, cluster 1 halts processing of workloads associated with the first CPU task once timing window 2 begins at time 403. Meanwhile, cluster 2 begins processing of workloads associated with the second CPU task during the time of timing window 2.

At time 404, the timing window reverts to timing window 1. At this point, the workload processed by cluster 2 during timing window 2 becomes preempted, and at time 404 cluster 1 resumes processing of the workload associated with the first CPU task that had previously been preempted at the start of timing window 2. As cluster 1 resumes processing of the first CPU task workload, CPU 104 also executes a third CPU task for processing. At time 405, cluster 1 finishes processing of the workload associated with the first CPU task and at time 406 begins processing of the workload associated with the third CPU task. At time 407, processing of the third CPU task workload becomes preempted as the timing window reverts to timing window 2. At this point, cluster 2 resumes processing of the workload associated with the second CPU task.

At time 408, a new data frame (frame 2) is received. At time 409, CPU 104 executes a fourth CPU task. At time 410, GPU driver 108 schedules a light workload associated with the fourth CPU task and determines that additional processing is not required for the fourth CPU task. Therefore, GPU driver 108 schedules a low-priority workload during the remainder of timing window 1. The low-priority workload is preempted once timing window 2 begins, and CPU 104 executes a fifth CPU task. Then, at time 411, GPU driver 108 schedules a workload associated with the fifth CPU task to both clusters 1 and 2. At time 412, GPU 106 completes execution of the workload associated with the fifth CPU task and resumes processing of a low-priority workload for the remainder of timing window 2.

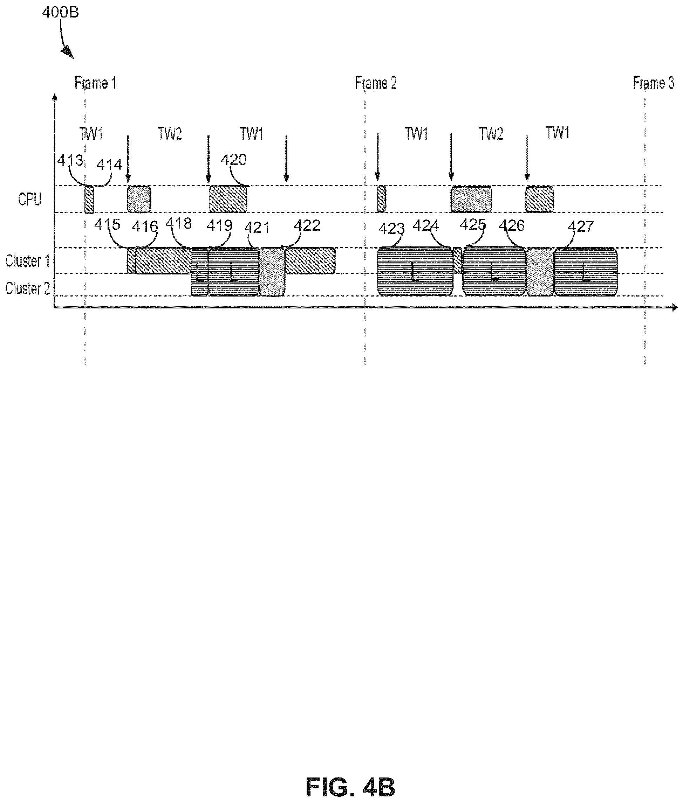

Figure 4B depicts an alternative tightly-coupled coprocessor scheme used alone or in combination with Figure 4A. Referring next to diagram 400B, at time 413, CPU 104 executes a first CPU task. At time 414, CPU 104 registers a corresponding workload associated with the first CPU task to determine whether additional processing is necessary. In one example, CPU 104 can register workloads to be assigned to GPU 106 in a list scheduled during a subsequent timing window. As shown in diagram 400B, CPU 104 executes no additional tasks during the remainder of timing window 1. At time 415, the timing window changes to timing window 2. At this point in time, GPU driver 108 queues the registered workloads from the previous timing window for execution. GPU driver 108 then schedules the workload associated with the first CPU task to cluster 1 for processing. GPU driver 108 determines that the first CPU task requires processing and at time 416 begins processing a workload associated with the first CPU task on cluster 1. Meanwhile, CPU 104 executes a second CPU task at time 415 and registers a workload associated with the second CPU task for the next timing window. At time 418, cluster 1 finishes execution of the workload associated with the first CPU task. Since no additional workloads were queued during timing window 1, clusters 1 and 2 begin processing a low-priority workload for the remainder of timing window 2.

At time 419, the timing window changes to timing window 1 and the workloads queued from the previous timing window can now be executed by clusters 1 and/or 2 of GPU 106. However, in some examples, the queued workloads are delayed by a designated time within the current timing window. For example, queued workloads optionally include an estimated time required to complete the workload. If the estimated time is less than the duration of the current timing window, the queued workload can be delayed until the time remaining in the current timing window is equal to the estimated completion time of the queued workloads. This is illustrated in diagram 400B, as the workload associated with the second CPU task is not performed by GPU 106 at the start of timing window 1, but rather, begins at time 421 after some time has elapsed. Instead, both clusters 1 and 2 process a low-priority workload during time 419 until the remaining time in timing window 1 equals the estimated completion time with the workload associated with the second CPU task.

Also at time 419, CPU 104 begins processing a third CPU task. At time 420, CPU 104 registers a workload associated with the third CPU task, which the GPU 106 begins executing with cluster 1 at time 422 for the duration of the subsequent timing window.

A new data frame (frame 2) is subsequently received. Beginning at time 423, CPU 104 begins processing a fourth CPU task at timing window 1. Since no workloads were registered by CPU 104 at the previous timing window, GPU 106 begins processing a low-priority workload for the duration of timing window 1 beginning at time 423. Timing window 2 begins at time 424. At this time, cluster 1 of GPU 106 executes a light workload associated with the fourth CPU task to cluster 1 while CPU 104 begins processing a fifth CPU task. At time 425, cluster 1 finishes processing the light workload associated with the fourth CPU task and resumes processing of a low-priority workload (along with cluster 2) for the duration of timing window 2. At time 426, CPU 104 executes a sixth CPU task while clusters 1 and 2 begin processing workloads associated with the fifth CPU task from the previous timing window. Once completed, clusters 1 and 2 resume processing of a low-priority workload beginning at time 427 for the duration of timing window 1.

In some examples, the order of priority for a given task is based on the timing window in which it is initially scheduled. For example, for a given set of three workloads to be executed on the GPU (W1, W2, W3), W1 can have the highest priority in timing window 1 and therefore will not be preempted by W2 or W3 during timing window 1. Once timing window 2 begins, the priority can change so that W2 has the highest priority, enabling W2 to immediately schedule for execution and preempt W1 if W1 has not finished execution during timing window 1. Similarly, once the timing window switches to timing window 3, W3 then has the highest priority and may be scheduled immediately for execution and may preempt W2. Thus, as the timing window changes between timing windows 1, 2, and 3, the order of priority between the workloads assigned to the GPU can also change.

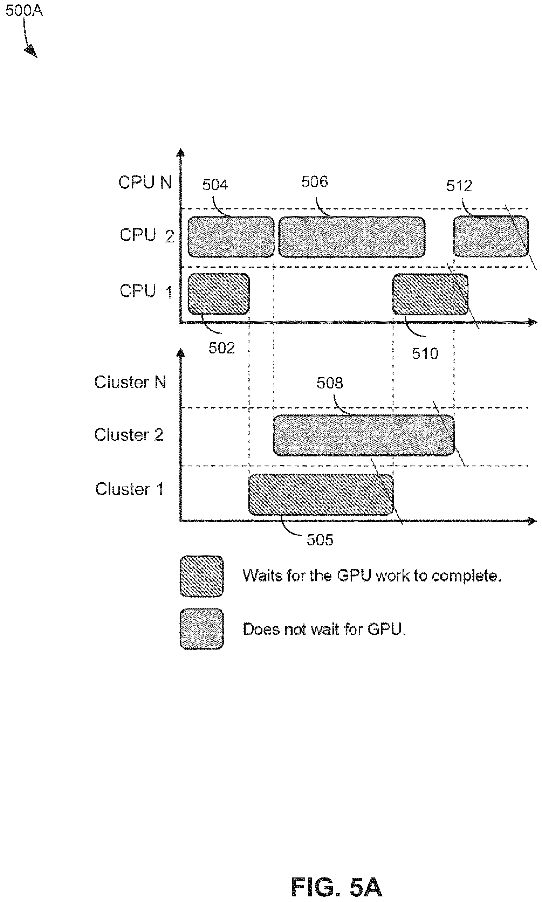

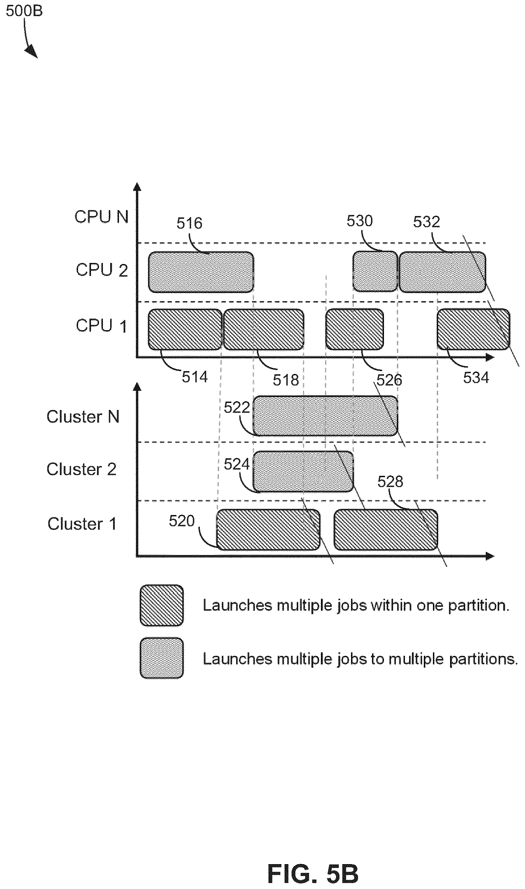

Figures 5A-5B depict diagrams of synchronizing work between a CPU and a GPU. Specifically, Figure 5A depicts a blocking CPU-GPU synchronization in which a CPU processes tasks based on processing concurrently performed by the GPU, and Figure 5B depicts launching multiple workloads associated with a single CPU task to multiple clusters of the GPU. In both Figure 5A and 5B, the horizontal axes are represented by time.

Referring to Figure 5A, system 500A includes any number of CPU cores (CPU 1, CPU 2, and up to an *N* amount of CPU-N, where *N* is an integer). Additionally, system 500A includes any number of GPU clusters (cluster 1, cluster 2, and up to an N amount of clusters N, where *N* is an integer). Each CPU core is configured to execute tasks for one or more applications as previously described, and each GPU cluster is configured to execute workloads associated with tasks executed by a CPU core, as previously described. At the beginning of a given time (a time period within a single timing window or spanning multiple timing intervals of a data frame) illustrated in Figure 5A, both CPU cores CPU 1 and CPU 2 execute distinct tasks 502 and 504, respectively. Both task 502 and task 504 require processing by a GPU cluster. Accordingly, one or more workloads 508 associated with the task 504 executing on CPU 2 are scheduled to cluster 2, and one or more workloads 505 associated with the task 502 executed on CPU 1 are scheduled to cluster 1.

In various examples, some CPU cores may execute tasks based on whether a corresponding GPU cluster is currently executing workloads. For example, consider CPU 1. As shown in Figure 5A, CPU 1 initially begins executing task 502 for a time period. As CPU 1 executes task 502, cluster 1 begins executing one or more workloads 505 associated with the task 502. While cluster 1 executes workloads associated with the first CPU task, CPU 1 is configured to delay processing of another task (task 510), which can be the same task as task 502) until cluster 1 finishes executing workloads associated with the previous task. In this example, CPU 1 and cluster 1 are configured in a "blocking" synchronization configuration, since CPU 1 blocks execution of new tasks for a period of time until sufficient processing resources are available on the GPU, namely a corresponding cluster on the GPU.

In additional or alternative examples, some CPU-GPU synchronization configurations are not "blocked." In these examples, the CPU is configured to execute tasks independently of whether a corresponding GPU cluster is currently executing workloads associated with another task. As shown in Figure 5A, CPU 2 initially begins executing a task 504. Once CPU 2 finishes executing 504, one or more workloads associated with task 504 are scheduled to cluster 2 for execution. While cluster 2 executes workloads 508, CPU 2 then executes another task 506. Unlike CPU 1, CPU 2 is configured to immediately begin executing task 506 while cluster 2 executes workloads 508 associated with the previous task 504. Non-blocking execution can be accomplished through (1) frame buffering, where the CPU queues multiple frames for the GPU to process; (2) parallel execution, where the CPU launches multiple workloads on the GPU in sequence (either part of the same sequence by slicing the workload requests to multiple buffers, or in multiple unrelated sequences); and (3) batching, where the CPU merges multiple similar requests across one request that executes in parallel.

In some examples, the CPU-GPU synchronization is partially "blocked" so that the CPU is free to execute tasks simultaneously with a corresponding GPU until the GPU becomes too backlogged with workloads from the CPU. In that case the CPU may wait until the GPU finishes a certain amount of workloads to "catch up" with the CPU. For example, CPU 2 may wait a certain time period until cluster 2 finishes execution of workloads 508 before executing task 512.

Now referring to Figure 5B, in some examples, workloads associated with one or more CPU tasks are scheduled to multiple GPU clusters. As shown in diagram 500B, workloads associated with tasks executed by CPU 1 are assigned to cluster 1. Specifically, when CPU 1 executes task 514, task 518, task 526, and task 534 in sequence, one or more workloads 520, 528 associated with these tasks are scheduled to cluster 1 for execution. Alternatively stated, CPU 1 and cluster 1 share a 1:1 synchronization configuration in which workloads associated with tasks executed by CPU 1 are scheduled to only cluster 1 for execution. Conversely, when CPU 2 executes any of task 516, task 530, and task 532, one or more workloads associated with any of these tasks can be scheduled to cluster 2 and/or cluster N. Thus, CPU 1 shares a 1:N synchronization configuration in which workloads associated with tasks executed by CPU 1 are scheduled to multiple GPU clusters for execution. As illustrated in diagram 500B, when CPU 2 executes task 516, workloads 522 associated with task 516 are scheduled to cluster N and workloads 524 associated with task 516 are additionally scheduled to cluster 2. The GPU clusters as shown in diagram 500B can also implement the blocking synchronization techniques as referenced in system 500A.

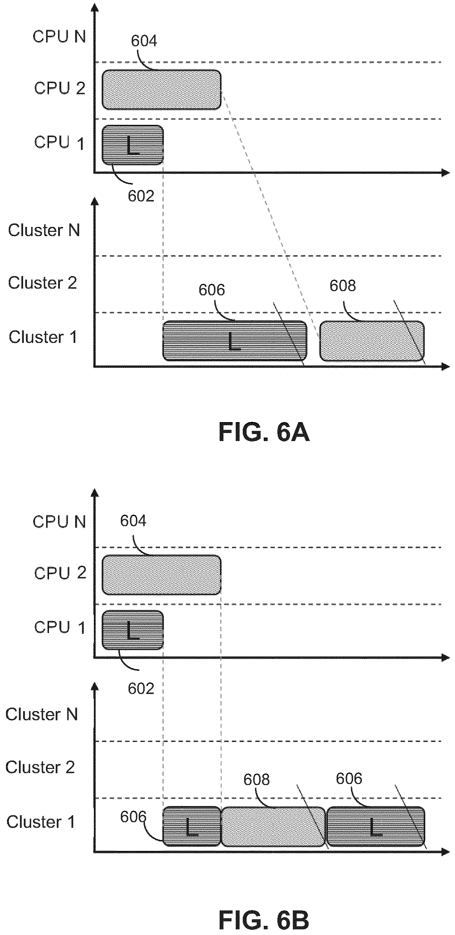

Examples of the coprocessor scheduling policy (and the coprocessor assignment policy described further herein) optionally include a preemption policy which governs the preemption of workloads configured for execution by the coprocessor GPUs. Examples of preemption scheduling are illustrated in Figures 6A-6B (although also depicted in other figures), in which Figure 6A depicts a non-preemptive policy and Figure 6B depicts examples of a preemptive policy between a CPU and a GPU. Referring to Figure 6A, cluster 1 is configured to execute workloads associated with tasks executed by both CPU 1 and CPU 2. CPU 1 initially executes a low-priority task 602 at the same time that CPU 2 executes a high-priority task 604. Since both tasks require processing with a GPU, cluster 1 is configured to execute workloads 606 associated with low-priority task 602 (for example, a best effort task) and also to execute workloads 608 associated with high-priority task 604 (for example, a safety-critical task). As shown in Figure 6A, CPU 1 finishes low-priority task 602 before CPU 2 finishes high-priority task 604. Accordingly, cluster 1 begins executing workloads 606 once CPU 1 finishes executing low-priority task 602 while CPU 2 continues to execute high-priority task 604.

After CPU 2 finishes high-priority task 604, cluster 1 may execute workloads 608 associated with the high-priority task 604. However, at the time CPU 2 finishes high-priority task 604, cluster 1 is already executing workloads 606 associated with the low-priority task 602 executed on CPU 1. In a non-preemptive example as shown in Figure 6A, workloads 606 associated with the low-priority task 602 are not preempted by a workload launch request including higher-priority workloads. Accordingly, cluster 1 executes workloads 608 associated with the high-priority task 604 during a subsequent timing period once cluster 1 finishes executing workloads 606. Alternatively stated, low-priority workloads executed by a GPU cluster cannot be preempted by a subsequent workload launch request with higher priority workload configured for execution by the same GPU cluster. In these examples, subsequent workload launch requests are instead executed on a first-come, first-serve basis.

Conversely, Figure 6B illustrates examples of preemptive scheduling in which lower-priority workloads are preempted by higher-priority workloads. As previously described, task 604 is higher in priority than task 602; however, cluster 1 initially executes workloads 606 associated with the low-priority task 602 because CPU 1 finishes executing low-priority task 602 before CPU 2 finishes executing high-priority task 604. After CPU 2 finishes executing high-priority task 604, cluster 1 can execute workloads 608 associated with the high-priority task 604. Workloads 608 are higher in priority than workloads 606 currently executed by cluster 1, so cluster 1 is configured to stop execution of the lower-priority workloads 606 and begin execution of high-priority workloads 608. That is; high-priority workloads 608 preempt the low-priority workloads 606. In some examples, cluster 1 is configured to resume execution of low-priority workloads 606 upon completion of high-priority workloads 608 and optionally when there are no pending workload launch requests with higher-priority than the low-priority workloads 606. These examples are useful when the progress executing a lower-priority workload can be stored and accessed for processing at a subsequent time period. In other examples, preempting a lower-priority workload resets the progress on the lower-priority workload and thereby requires the GPU to restart the lower-priority workload from the beginning. These examples require less processing bandwidth than examples that store job progression.

For examples that implement workload preemption on the coprocessor such as a GPU, the coprocessor receives a request, for example, from a driver that specifies when the preemption of a lower-priority workload will occur. A preemption policy can be implemented through hardware and/or software. In one hardware example, preemption occurs at the command boundary such that lower-priority workloads (or contexts including a set of lower-priority workloads) are preempted once the command is completed, or at the earliest preemptable command (that is, when the GPU can implement the next command). In another hardware example, preemption occurs at the thread boundary, where a lower-priority context stops issuing additional lower-priority workloads and becomes preempted when all workloads being currently executed are finished. In yet another hardware example, workload execution is preempted by saving the workload state into memory, which can be restored once execution is resumed. In another hardware example, preemption occurs during execution of a thread, in which the GPU can immediately stop execution of a lower-priority thread and store the previously executed part of the thread into memory for later execution.

A coprocessor may also implement preemption through software. In one software example, preemption occurs at the thread boundary as previously described in hardware implementations. In another software example, preemption occurs immediately upon receiving the request and any current or previously executed workloads within the same context must be restarted at a later time period, analogous to resetting a lower-priority workload as referenced in Figure 6B. In another software example, preemption occurs at a defined checkpoint during execution of a workload. A checkpoint can be set at a workload boundary or at any point during execution of a workload and saved for future execution. Once the coprocessor can continue executing the workload, it resumes executing the workload at the saved checkpoint. Additionally or alternatively, workloads are sliced into multiple sub-portions (sub-kernels, for example) before the coprocessor executes the workload launch request and preemption may occur at any of the sliced sub-kernel boundaries.

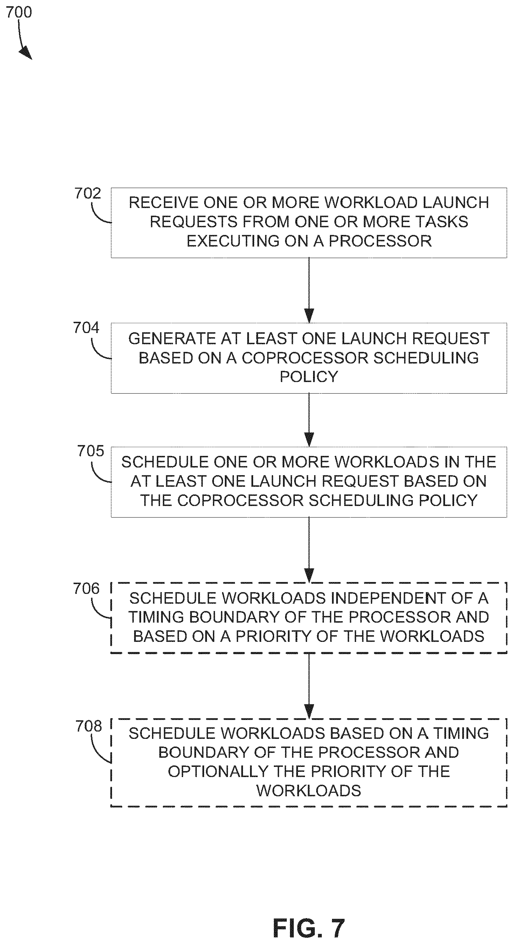

Figure 7 depicts a flow diagram illustrating an exemplary method for scheduling workloads for execution to a coprocessor. Method 700 may be implemented via the techniques described with respect to Figures 1-6, but may be implemented via other techniques as well. The blocks of the flow diagram have been arranged in a generally sequential manner for ease of explanation; however, it is to be understood that this arrangement is merely exemplary, and it should be recognized that the processing associated with the methods described herein (and the blocks shown in the Figures) may occur in a different order (for example, where at least some of the processing associated with the blocks is performed in parallel and/or in an event-driven manner).

Method 700 includes block 702 of receiving workload launch requests from one or more tasks executing on a processor, such as by a driver implemented on a coprocessor or other processing unit. The workload launch requests include a list of the workloads associated with a task executed by the processor, and may include other parameters such as the priority of workloads in the list and the processing resources required to execute the respective workloads on the coprocessor. At block 704, method 700 proceeds by generating at least one launch request from the workload launch requests and based on a coprocessor scheduling policy. The driver or other processing unit can then schedule workloads for execution on the coprocessor based on the launch requests and the coprocessor scheduling policy (block 705).

Depending on the example, method 700 proceeds based on the terms of the coprocessor scheduling policy. Optionally, method 700 proceeds to block 706 and schedules workloads for execution independent of a time period (*e.g.,* a timing window and/or data frame boundary) of the processor or other external events. In this loosely-coupled configuration, the coprocessor can schedule workloads asynchronously to the timing of the processor. Such loosely-coupled configurations optionally enable workload scheduling based on an order of priority between the workloads received by the coprocessor. For example, even though the coprocessor may schedule workloads asynchronously to the processor timing windows, the coprocessor scheduling policy may include a preemption policy that preempts lower priority workloads currently executed or queued on the coprocessor with higher priority workloads.

Additionally, or alternatively, method 700 optionally proceeds to block 708 and schedules workloads for execution based on a timing window of the processor. In one implementation, method 700 schedules workloads for execution on the coprocessor during the same timing window of the processor. In another implementation, method 700 schedules workloads for execution on the coprocessor in the same timing window, wherein the coprocessor 106 synchronizes with processor 104 in the same timing window but maintains the freedom to execute workloads associated with a different queue and/or task consistent with other priority rules or processing availability on the coprocessor. That is, a coprocessor scheduling policy optionally includes a preemption policy that applies to tightly-coupled configurations and which schedules workloads for execution based on an order of priority of workloads. When a workload launch request includes workloads with higher priority than workloads currently executed on the coprocessor, the coprocessor scheduling policy configures the coprocessor to preempt the lower priority workloads and synchronize the higher priority workloads to the subsequent timing window of the processor or another common even between the coprocessor and processor.

### Coprocessor Assignment Policies

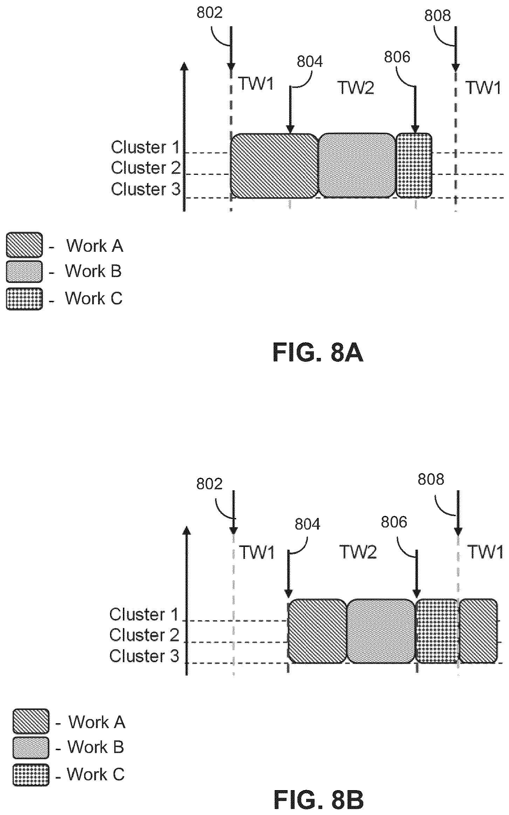

As previously described with respect to Figure 1A, in some examples, coprocessor 106 (in particular driver 108) is configured to implement a coprocessor assignment policy that assigns workloads associated with the tasks 105 for execution to clusters 114, 116 in accordance with at least one workload launch request. The coprocessor assignment policy defines where workloads are executed on one or more designated clusters of coprocessor 106. Figures 8-11 illustrate various examples of assigning workloads on a coprocessor such as coprocessor 106. The assignment techniques described further herein can be implemented in conjunction with the scheduling policies previously described or as standalone examples. For example, the assignment policies may implement the preemption techniques described in the context of scheduling workloads for execution.

Figures 8A-8B depict diagrams of data coupling between multiple clusters of a coprocessor. In the example shown in Figure 8A, each cluster (cluster 1, cluster 2, cluster 3) is configured to execute workloads associated with tasks executed by a processor. In some examples, such as shown in Figure 8A, data is coupled at the frame boundaries or alternatively stated, data is coupled between the coprocessor and processor at the frame-rate of the input data provided to the processor. This data coupling is shown in Figure 8A by the dotted line extending from the frame 1 boundary indicated at numeral 802. At the frame 1 boundary 802, each cluster begins processing workloads associated with the same processor task, and continue doing so even through the timing window boundary indicated at numeral 804. Data is not coupled at the timing window boundaries, which enables the clusters to continue processing workloads independent of the timing window 1 boundary 804 and at timing window 2 boundary 806. Once the new frame 2 boundary 808 arrives, data from the new data frame is again coupled between the clusters as data is received by the processor (not shown in Figure 8A).

Figure 8B depicts a diagram of data coupling at the timing window boundaries as opposed to the data frame boundaries. At the frame 1 boundary 802, no data is assigned to the clusters. Instead, workloads associated with a processor task are assigned to all three clusters at the timing window 2 boundary 804. In between the timing window 2 boundary 804 and the timing window 1 boundary 806 (during timing window 2), the clusters may finish processing workloads associated with one processor task and may begin processing workloads associated with another processor task or may begin processing a low-priority workloads until data between the clusters is coupled again at the timing window boundary 806. The data coupling as depicted in Figures 8A-8B is not necessarily exclusive and may be combined to have data coupled at both the timing window boundary and at the frame boundaries.

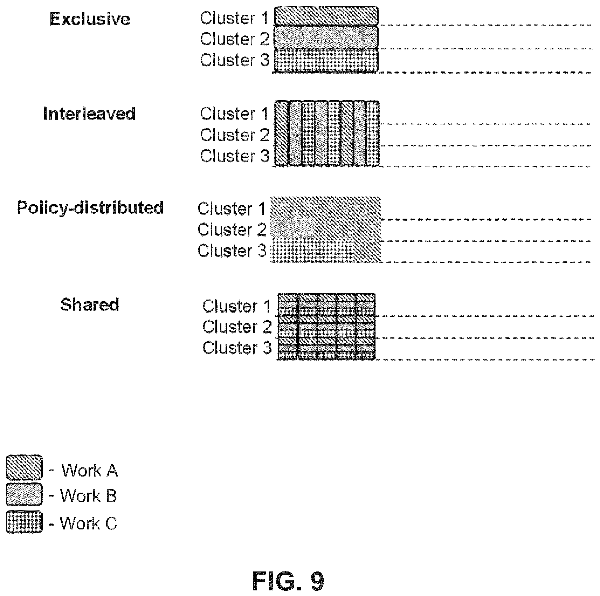

Figure 9 depicts a diagram of coprocessor assignment policies applied to multiple clusters of a coprocessor such as a GPU. The assignment policies described in the context of Figure 9 can be modified based on the data coupling techniques of Figures 8A-8B. Although four assignment policies are shown in Figure 9, other assignment policies and combinations thereof are possible. For example, at a first timing interval (*e.g*., for one data frame) workloads are assigned to clusters in accordance with an interleaved policy, whereas at a different timing interval (*e.g*., a subsequent data frame) workloads are assigned according to a policy-distributed policy. Additionally, assignment policies may apply to every cluster of a GPU or may apply to a subset of clusters where one subset of clusters of a GPU may follow a different assignment policy than another subset of clusters.

In some examples, GPU jobs are assigned to clusters using an exclusive policy where workloads associated with different CPU tasks are assigned exclusively to different clusters for one or more timing intervals. Referring to Figure 9, jobs associated with a first CPU task (Work A) are assigned to cluster 1, jobs associated with a second CPU task (Work B) are assigned to cluster 2, and jobs associated with a third CPU task (Work C) are assigned to cluster 3, with the first, second, and third CPU tasks distinct from each other. An exclusive policy can be implemented in different ways. For example, in an exclusive-access policy, all clusters (and hence all compute units) of the GPU are dedicated to processing jobs of the same CPU task. In an exclusive-slice policy, the GPU is sliced into multiple GPU partitions, each partition comprising one or more clusters or portions of a cluster. In this example, workloads from the same CPU task are assigned only to a single GPU partition or group of clusters. In the case of multiple CPU tasks, workloads from each CPU task are assigned respectively to different partitions of the GPU. For clusters with sufficient isolation to include multiple isolated clusters or partitions, an exclusive policy (or any of the assignment policies described further herein) enables assignment of workloads at the partition level or the cluster level. This assignment policy can be used to implement space isolation as described above.

In contrast to an exclusive assignment policy, an interleaved assignment policy assigns workloads associated with the same CPU task simultaneously to multiple clusters of the GPU. As shown in Figure 9, jobs associated with a first CPU task (Work A) are assigned to clusters 1-3 for processing for a given time period (*e.g.,* a timing window, data frame, or a portion thereof), followed by jobs associated with a second CPU task (Work B) assigned to those same clusters at the next data coupling boundary. This process can be repeated for any additional CPU tasks that require assignment for a given time period. Additionally, unfinished workloads can be resumed from an earlier data coupling boundary and assigned to all three clusters simultaneously at the next data coupling boundary. As shown in Figure 9, Work A is assigned first to clusters 1-3, followed by Work B, then concluding with Work C, and repeated for a subsequent timing interval. This assignment policy can be used to implement temporal isolation as described above.

Both the exclusive and interleaved assignment policies correspond to a static assignment policy that assigns workloads to clusters/partitions independent of workload priority or computing resources. Conversely, a policy-distributed assignment policy exemplifies a dynamic assignment policy that considers workload priority and the computing resources of a cluster/partition. A workload associated with a processor task that is higher in priority than another workload associated with another processor task will generally be assigned before the lower priority workload and will generally be assigned to more available clusters than the low-priority workload. The amount of clusters or partitions that the workload is assigned to depends on the amount of resources necessary to process the workload and/or the amount of computing resources currently available in the coprocessor.

In the example depicted in Figure 9, Work A requires the greatest amount of computing resources to process, while Work B requires the least amount of computing resources to process. To accommodate the greater number of necessary resources, Work A occupies the totality of computing resources for cluster 1 for a given timing interval, and occupies the computing resources for clusters 2 and 3 for a portion of the given timing interval. In contrast, Work B occupies only the computing resources of cluster 2 for a portion of the given timing interval. A policy-distributed policy can be used to evaluate a new set of GPU workloads for a subsequent timing window to dynamically adjust the assignment of workloads so that higher-priority or larger workloads can begin processing once computing resources are available. In a policy-distributed assignment policy such as the one shown in Figure 9, any processing resources that become available after execution of a workload during a given timing window are then allocated to the highest priority workload in the timing window (even if the highest priority workload is scheduled after a lower-priority workload). As shown in Figure 9, the highest priority workload is Work A, and is allocated the processing resources of Clusters 2 and 3 once Work B and C finish execution.

A workload may sometimes require processing that exceeds the currently available computing resources in the coprocessor. Therefore, in some examples, the assignment policy (including any of the assignment policies previously described) includes a policy governing the assignment of queued workloads that exceed the currently available computing resources depending on the hardware of the coprocessor and the system parameters. In one example, a workload that exceeds currently available computing resources simply remains queued until more computing resources become available that meet the processing requirements of the workload, thereby leaving the limited number of available computing resources idle until a subsequent time period. In another example, the available computing resources are assigned to the highest priority workload currently executed on the coprocessor; that is, the highest priority workload currently executed receives more processing resources (*e.g.,* clusters, partitions, or compute units) than originally requested. In another example, the heavy workload begins execution even if insufficient computing resources are currently available. In yet another example, the highest priority workload with sufficient processing demands that meet the available computing resources is assigned the available computing resources.

Figure 9 also depicts an example of a shared assignment policy. A shared assignment policy assigns workloads associated with distinct processor tasks to the same cluster of the coprocessor to process the workloads simultaneously within a time interval. For example, cluster 1 receives portions of the Work A, Work B, and Work C that it processes simultaneously for a timing window. Clusters 2 and 3 also receive portions of Work A, Work B, and Work C within the same timing window. The portions shared between clusters may or may not be equally divided and in some examples depends on the processing capacity of the clusters and the processing requirements of the workloads.

The coprocessor assignment policy may include a combination of the policies described herein. For example, the coprocessor assignment policy may include a mixed exclusive-shared policy, where one or more clusters are exclusively assigned workloads (that is, one cluster receives workloads associated with one queue and another cluster receives workloads associated with another queue), while another cluster implements a shared policy that includes workloads associated with different tasks.

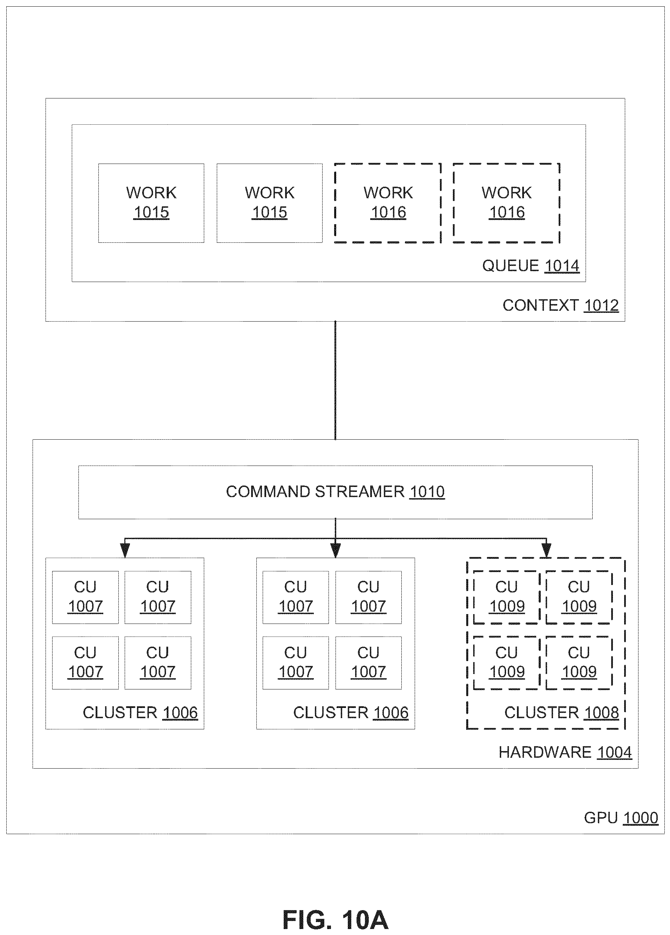

Figures 10A-10C depict block diagrams illustrating exemplary systems configured to assign workloads to multiple clusters of a GPU 1000. GPU 1000 includes hardware 1004 configured for performing the execution of workloads associated with CPU tasks that require processing on the GPU 1000, and in some examples, includes hardware or software isolation between different clusters to reduce or eliminate processing faults from impacting parallel processing. Referring to Figure 10A, a shared context 1012 includes a queue 1014 containing one or more workloads (WORK) 1015 corresponding to a first CPU task. Workloads 1015 are assigned to one or more of the clusters 1006 or compute units 1007 based on a coprocessor scheduling policy and/or coprocessor assignment policy. Context 1012 optionally includes one or more additional workloads 1016 associated with a different CPU task.

Workloads 1015 and optionally workloads 1016 are sent to a command streamer 1010 for assignment to clusters 1006 or cluster 1008. For example, if queue 1014 includes only workloads 1015, then workloads 1015 are assigned to at least one of clusters 1006 comprising a plurality of compute units 1007. However, when queue 1014 contains workloads 1016, command streamer 1010 is configured to assign workloads 1016 to at least one compute unit 1009 of cluster 1008. In other examples, the assignment of workloads is governed by software methods. As shown in Figure 10A, GPU 1000 includes a single command streamer 1010 that corresponds to a single queue 1014.

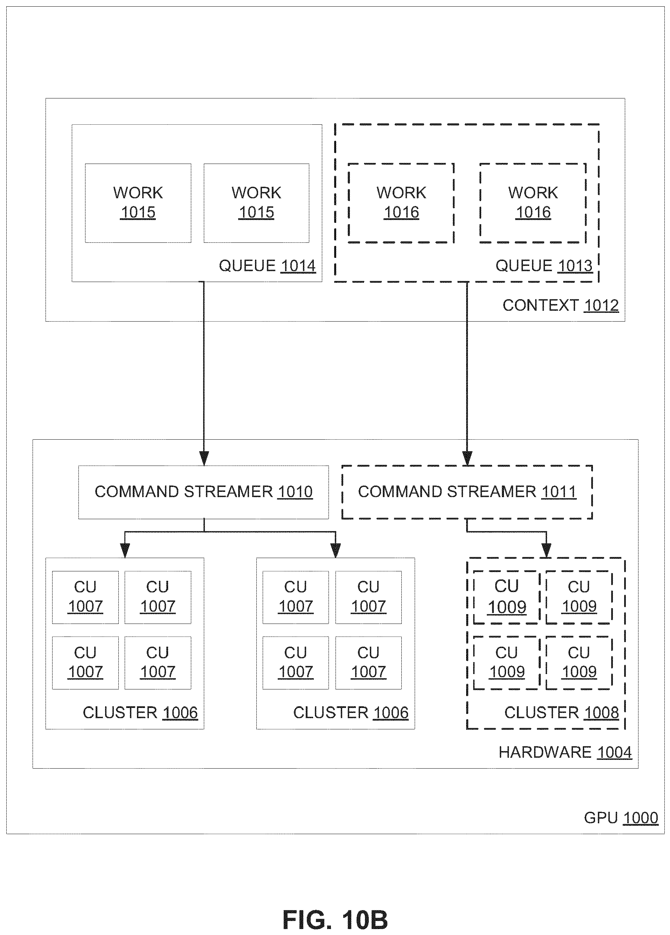

In some examples, the GPU 1000 includes a plurality of queues and command streamers that assign workloads to distinct computing resources on the GPU. For example, Figure 10B depicts a context 1012 that includes a first queue 1014 and a second queue 1013. The first queue 1014 is distinct from the second queue 1013 to provide sufficient spatial or temporal isolation and includes one or more workloads 1015 corresponding to a first CPU task, while second queue 1013 includes one or more workloads 1016 corresponding to a second CPU task. GPU 1000 also includes a first command streamer 1010 and a second command streamer 1011. In this example, first command streamer 1010 is configured to receive the workloads 1015 from first queue 1014 and assign the requests to one or more of the clusters 1006 (or compute units 1007 of a cluster 1006) for processing the workloads in the request. Meanwhile, second command streamer 1011 is configured to receive workloads 1016 from second queue 1013 and to assign the workloads to cluster 1008 comprising a plurality of compute units 1009. Although Figure 10B illustrates first command streamer 1010 coupled to two clusters 1006 and second command streamer 1011 coupled to a single cluster 1008, first command streamer 1010 and second command streamer 1011 can be configured to assign workloads to any number of clusters supported by GPU 1000 through software, hardware, or a combination thereof.

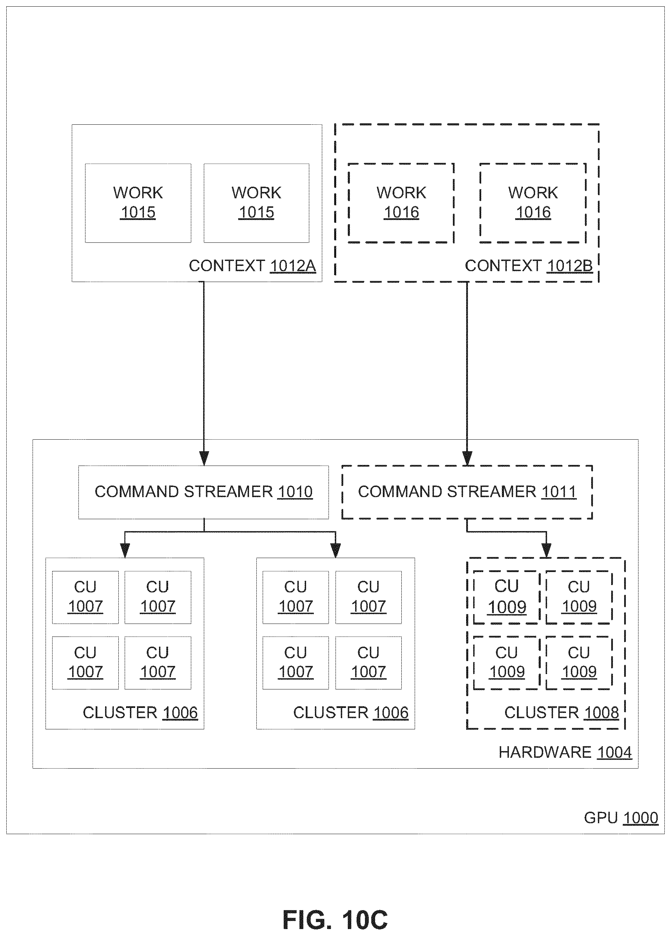

In another example, Figure 10C depicts multiple private contexts 1012A and 1012B each comprising respective workloads 1015 and 1016. Each context is distinct and isolated from the other contexts through either hardware or software constraints to provide sufficient spatial or temporal isolation. Additionally, each context can be configured to provide the workload to a respective command streamer for assignment to the clusters of the GPU 1000. As shown in Figure 10C, context 1012A provides workloads 1015 to command streamer 1010 and context 1012B provides workloads 1016 to command streamer 1011. Command streamer 1010 then assigns the workloads to one or more clusters 1006 and command streamer 1011 assigns the workloads 1016 to a cluster 1008. Within a given context, workloads may execute in parallel or out of sequence.

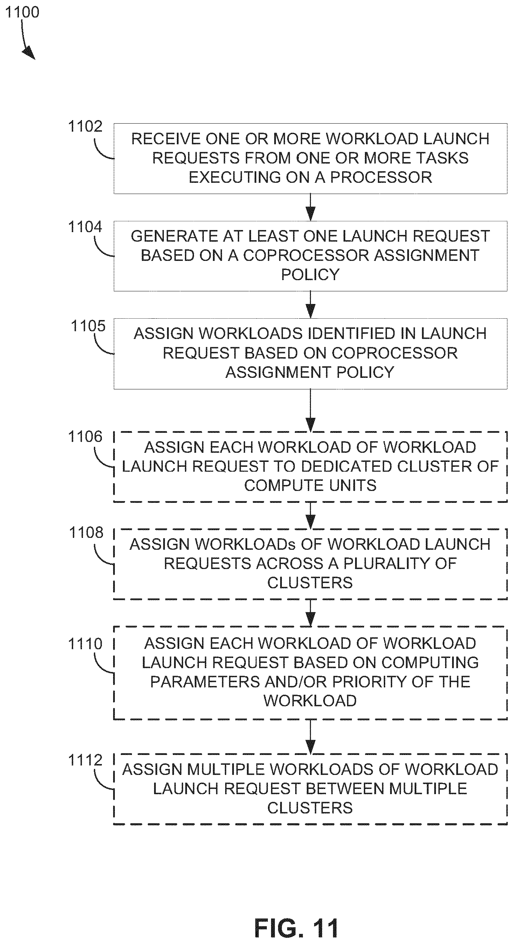

Figure 11 depicts a flow diagram illustrating an exemplary method for assignment kernels to processing resources of a coprocessor. Method 1100 may be implemented via the techniques described with respect to Figures 1-10, but may be implemented via other techniques as well. The blocks of the flow diagram have been arranged in a generally sequential manner for ease of explanation; however, it is to be understood that this arrangement is merely exemplary, and it should be recognized that the processing associated with the methods described herein (and the blocks shown in the Figures) may occur in a different order (for example, where at least some of the processing associated with the blocks is performed in parallel and/or in an event-driven manner).

Method 1100 includes receiving one or more workload launch requests from one or more tasks executing on a processor as shown in block 1102. Method 1100 then proceeds block 1104 by generating at least one launch request including one or more workloads based on a coprocessor assignment policy. Method 1100 then proceeds to block 1105 by assigning workloads identified in the launch requests to processing resources on the coprocessor based on the coprocessor assignment policy. For example, method 1100 optionally proceeds to block 1106 to assign each workload of a launch request to a dedicated cluster of compute units according to an exclusive policy.

Additionally, or alternatively, method 1100 proceeds to block 1108 and assigns each workload of a launch request across a plurality of distinct clusters according to an interleaved policy. In one example of this policy, a first workload in the launch request (*e.g.,* the workload with the highest priority) is assigned first to all the clusters during a first timing interval, followed by a second workload assigned to all the clusters during a second timing interval, and so on so that each workload is sequentially assigned to each of the clusters.

Additionally, or alternatively, method 1100 proceeds to block 1110 and assigns each workload of a launch request to at least one cluster based on the computing parameters and/or the priority of the workload according to a policy-distributed policy. For example, each workload is individually assigned to at least one cluster for a duration of execution on the clusters. A workload associated with a processor task that is higher in priority than another workload will generally be assigned before the lower priority workload and will generally be assigned to more available clusters than the low-priority workload. The amount of clusters or partitions that the workload is assigned to depends on the amount of resources necessary to process the workload and/or the amount of computing resources currently available in the coprocessor.

In some examples the coprocessor assignment policy includes a policy governing the assignment of queued workloads that exceed the currently available computing resources depending on the hardware of the coprocessor and the system parameters. In one example, a workload that exceeds currently available computing resources simply remains queued until more computing resources become available that meet the processing requirements of the workload, thereby leaving the limited number of available computing resources idle until a subsequent time period. In another example, the available computing resources are assigned to the highest priority workload currently executed on the coprocessor; that is, the highest priority workload currently executed receives more processing resources (*e.g.,* clusters, partitions, or compute units) than originally requested. In another example, the heavy workload begins execution even if insufficient computing resources are currently available. And in yet another example, the highest priority workload with sufficient processing demands that meet the available computing resources is assigned the available computing resources.

Additionally, or alternatively, method 1100 proceeds to block 1112 and assigns multiple workloads of the launch request between multiple clusters during the same timing interval so that portions of the workload are shared between multiple clusters according to a shared assignment policy. In one example, each workload in the launch request is shared across all clusters during the same timing interval so that each cluster is processing each workload simultaneously. Other coprocessor assignment policies are possible.

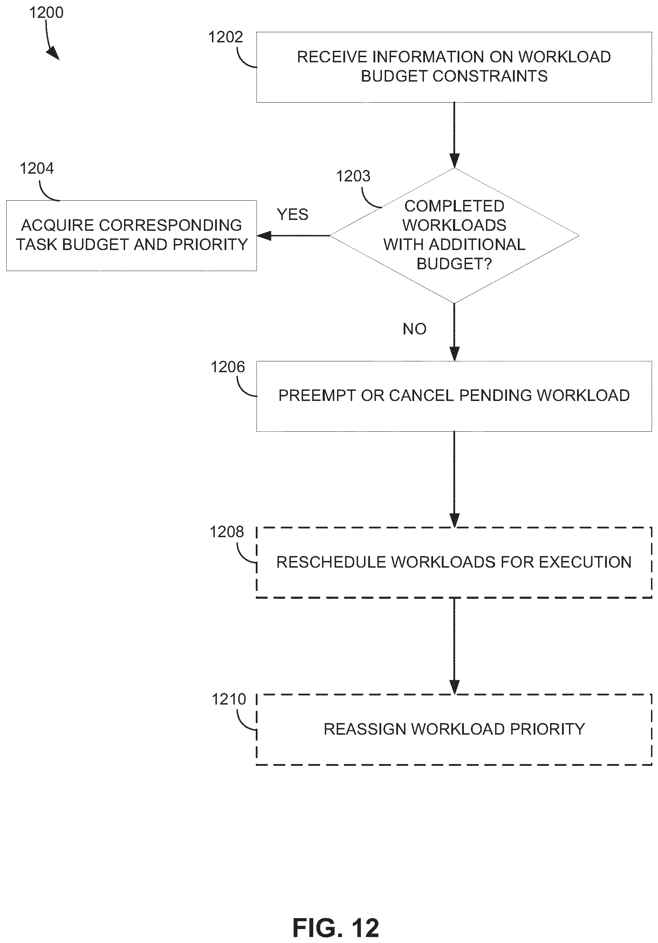

Figure 12 depicts a flow diagram illustrating an exemplary method for managing processing resources when executing workloads on a coprocessor, such as when currently executing workloads run out of execution budget on the coprocessor. Method 1200 may be implemented via the techniques described with respect to Figures 1-11, but may be implemented via other techniques as well. For example, method 1200 can be implemented sequentially as workloads are being scheduled and/or assigned to the coprocessor for execution, but can also be implemented during a scheduling event to maintain appropriate synchronization between the processor and coprocessor. The blocks of the flow diagram have been arranged in a generally sequential manner for ease of explanation; however, it is to be understood that this arrangement is merely exemplary, and it should be recognized that the processing associated with the methods described herein (and the blocks shown in the Figures) may occur in a different order (for example, where at least some of the processing associated with the blocks is performed in parallel and/or in an event-driven manner).

Method 1200 includes block 1202 and receives information on workload budget constraints, for example, from workload launch requests received by a driver. When a currently executed workload runs out of budget, method 1200 proceeds to block 1203 and determines whether there is any additional processing budget remaining after processing workload on the coprocessor. If there is additional processing budget remaining, method 1200 proceeds to block 1204 and acquires the corresponding task budget from the completed workloads and additionally receives the priority of the completed workloads. From there, the additional budget and priority information can be used to process queued workloads during a subsequent timing interval.

If no budget is available, then method 1200 proceeds to block 1206 to preempt and/or stop the currently executed workload. Optionally, method 1200 can then proceed to block 1208 and reschedule workloads for execution to the coprocessor. This example can be implemented when scheduling workloads according to the coprocessor scheduling policy as previously described. Additionally, or alternatively, method 1200 proceeds to block 1210 (either directly from block 1208 or from block 1206) to reassign the workload priority and optionally reschedule workloads for execution based on the updated workload priority.

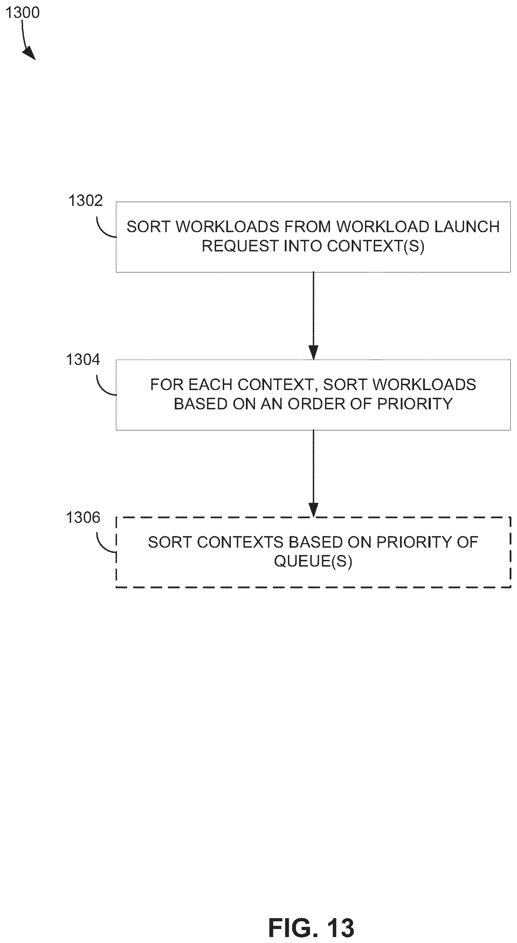

Figure 13 depicts a flow diagram illustrating an exemplary method for prioritizing workloads in a context. Method 1300 may be implemented via the techniques described with respect to Figures 1-12, but may be implemented via other techniques as well. The blocks of the flow diagram have been arranged in a generally sequential manner for ease of explanation; however, it is to be understood that this arrangement is merely exemplary, and it should be recognized that the processing associated with the methods described herein (and the blocks shown in the Figures) may occur in a different order (for example, where at least some of the processing associated with the blocks is performed in parallel and/or in an event-driven manner).

Method 1300 includes block 1302 and sorts workloads from one or more workload launch requests into one or more contexts. In some examples, a coprocessor includes multiple queues each independently configured with distinct workloads isolated from workloads associated with another queue. In these examples, workloads are sorted into each of the multiple contexts. Alternatively, for coprocessors that have only one context, all workloads are sorted into the single context.

Method 1300 then proceeds to block 1304 by sorting the workloads within a given context based on the priority of each workload in the context. This step is repeated or conducted in parallel for each context that is supported by the coprocessor. In some examples, the number of contexts depends on the number of queues on the coprocessor. For example, a coprocessor may have two queues that respectively correspond to one of the contexts. For coprocessors that implement multiple contexts, method 1300 optionally proceeds to block 1306 to sort the contexts based on the priority of the queues associated with the context. The queue with the highest priority will be scheduled and assigned first in the list of queued contexts. For single queue coprocessors, block 1306 is not required because the coprocessor computing resources will receive the single queue that contains the list of workloads scheduled for execution. Once the context is selected based on the priority of the queues, the computing resources begin executing the respective queues in the selected context based on the priority of the workloads within the context. The assortment of priority for each queue and/or context is determined for a point in time and may be further updated or adjusted as additional workloads requests become available.

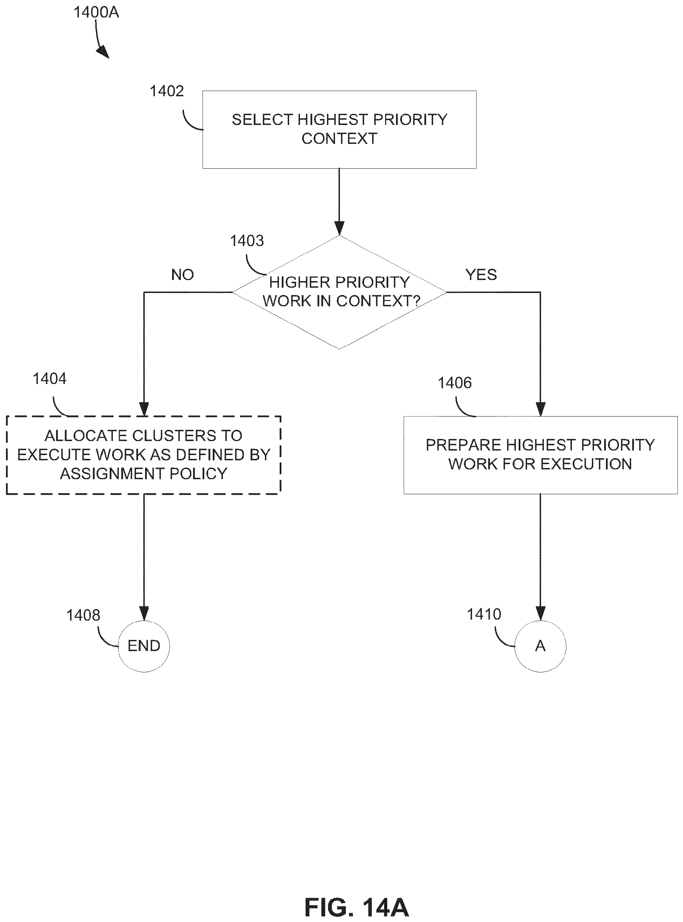

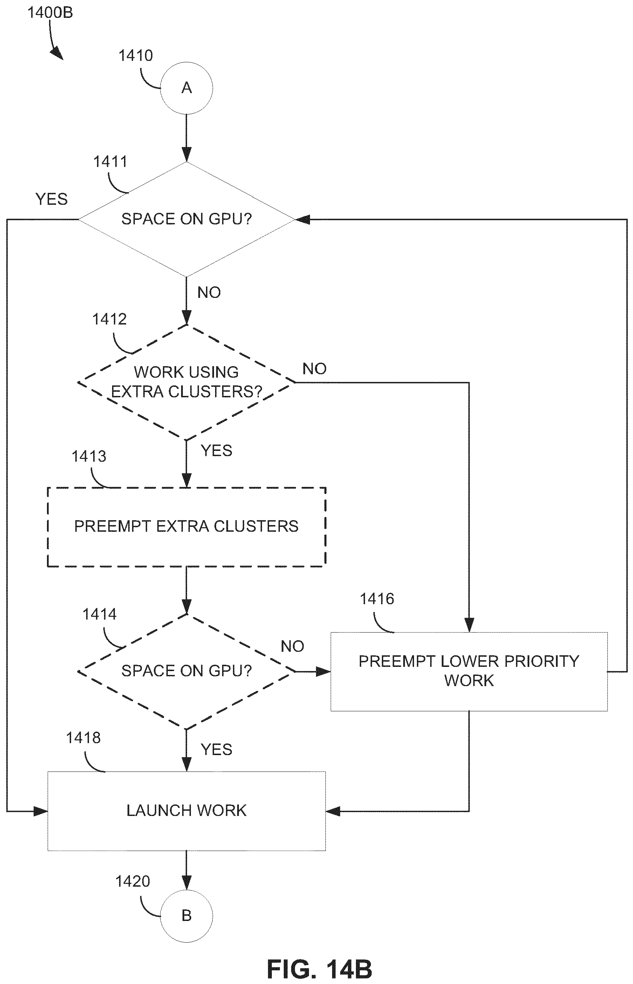

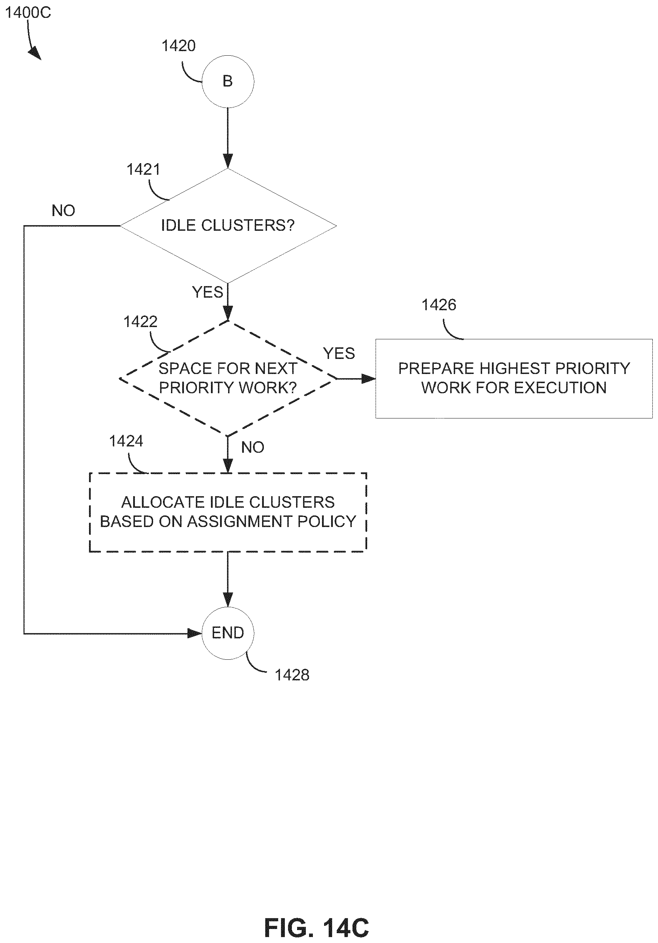

Figures 14A-14C depict flow diagrams illustrating exemplary methods for scheduling and assigning workloads. Methods 1400A-1400C may be implemented via the techniques described with respect to Figures 1-13, but may be implemented via other techniques as well. Specifically, methods 1400A-1400C can be executed in sequence as described further below. In addition, some steps in methods 1400A-1400C may be optional depending on the architecture and coupling between the processor and the coprocessor. The blocks of the flow diagram have been arranged in a generally sequential manner for ease of explanation; however, it is to be understood that this arrangement is merely exemplary, and it should be recognized that the processing associated with the methods described herein (and the blocks shown in the Figures) may occur in a different order (for example, where at least some of the processing associated with the blocks is performed in parallel and/or in an event-driven manner).

Beginning at block 1402, method 1400A selects the highest priority context for a plurality of contexts that each include a plurality of workloads to be scheduled and assigned to processing resources of a coprocessor. Method 1400A then proceeds to block 1403 and determines, for a workload in the given context, whether there are higher priority workloads that remain in the context. If no higher priority workload exists in the context, method 1400A optionally proceeds to block 1404 to allocate one or more clusters to execute work as defined by the coprocessor assignment policy, examples of which are previously described above. Additionally or alternatively, method 1400A terminates at block 1408.

For higher priority workloads that still exist in the context, method 1400A instead proceeds to block 1406 and prepares the highest priority workload in the context for execution. Method 1400A can then proceed further to indicator block A (block 1410) to continue further into method 1400B.

From indicator block A (block 1410), method 1400B proceeds to block 1411 and determines whether there is sufficient space on the coprocessor to execute the higher priority workload prepared in block 1406. If so, then method 1400B proceeds to block 1418 and launches the higher priority workload on the coprocessor. In examples where a context supports multiple queues, the workloads may be distributed among the queues before their associated workloads are executed on the coprocessor.

If insufficient space is available on the coprocessor, then method 1400B instead optionally proceeds to block 1412 by determining whether there are any workloads currently executed or scheduled that are utilizing extra clusters on the coprocessor, which can be determined based on scheduling parameters associated with the tasks, partition, or timing window, including budget, priority rules, requested number of clusters, among other parameters. If none of the workloads executing or scheduled are utilizing extra clusters, then method 1400B proceeds to block 1416 and preempts a lower priority workload(s) based on the preemption policy until there are sufficient clusters for the higher priority workload to execute. From there, method 1400B can proceed back to block 1411 to determine whether there is sufficient space on the GPU. Otherwise, if there are such workloads utilizing extra clusters on the coprocessor, method 1400B instead optionally proceeds to block 1413 by preempting workloads using extra clusters. Method 1400B then optionally determines at block 1414 again whether there is sufficient space on the coprocessor to launch the higher priority workload after preempting the extra clusters. If not, method 1400B proceeds to block 1416 and preempts the lowest priority workload(s) based on the preemption policy until there are sufficient clusters for the higher priority workload to execute. However, if sufficient space is available at block 1414, then method 1400B proceeds to block 1418 and launches the higher priority workload on the coprocessor. Method 1400B can then proceed to indicator block B (block 1420) and continue further into method 1400C.

Beginning from indicator block B (block 1420), method 1400C proceeds to block 1421 and determines whether there are any idle or available clusters on the coprocessor. If there are no idle clusters (all clusters are currently processing workloads), method 1400C ends at block 1428. If there are idle clusters on the coprocessor, method 1400C then optionally proceeds to block 1422 to determine whether there is sufficient space available for the next highest priority workload. If there is sufficient space available on the idle clusters to process the next workload, method 1400C proceeds to block 1426 and prepares the highest priority work for execution on at least one of the idle clusters. However, if there are idle clusters but there is not enough space to execute the next highest priority workload at block 1422, then method 1400C optionally proceeds to block 1424 to allocate the idle clusters based on the coprocessor assignment policy. For example, rather than execute the next highest priority workload, the idle clusters can be allocated to process currently executed workloads on other clusters by a policy-distributed coprocessor policy or any of the other coprocessor assignment policies described herein. Method 1400C can then ends at block 1428.

The methods and techniques described herein may be implemented in digital electronic circuitry, or with a programmable processor (for example, a special-purpose processor or a general-purpose processor such as a computer) firmware, software, or in various combinations of each. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instruction to, a data storage system, at least one input device, and at least one output device. Generally, a processor will receive instructions and data from a read-only memory and/or a random-access memory. Storage devices suitable for tangibly embodying computer program instructions and data include all forms of non-volatile memory, including by way of example semiconductor memory devices, such as erasable programmable read only memory (EPROM), electrically erasable programmable read only memory (EEPROM), and flash memory devices; magnetic disks such as internal hard disks and removable disks; magnetooptical disks; and digital video disks (DVDs). Any of the foregoing may be supplemented by, or incorporated in, specially-designed application specific integrated circuits (ASICs).

It is manifestly intended that this invention be limited only by the claims and the equivalents thereof.

## Claims

1. A processing system comprising:
a processor;
a coprocessor configured to implement a processing engine;
a processing engine scheduler configured to schedule workloads for execution on the coprocessor;
wherein the processing engine scheduler is configured to receive one or more workload launch requests from one or more tasks executing on the processor, and in response generate at least one launch request for submission to the coprocessor based on a coprocessor scheduling policy;
wherein based on the coprocessor scheduling policy, the processing engine scheduler selects which coprocessor clusters are activated to execute workloads identified by a queue based on the at least one launch request; and
wherein the coprocessor scheduling policy defines at least:
tightly-coupled coprocessor scheduling where workloads identified by the at least one launch request are scheduled to immediately execute on the coprocessor within time of a timing window in which the one or more tasks are being executed on the processor.

2. The processing system of claim 1, wherein the coprocessor scheduling policy defines a loosely-coupled coprocessor scheduling where workloads identified by the at least one launch request are scheduled to execute independently of a timing window of the one or more tasks executing on the processor and based on an order of priority of the workloads.

3. The processing system of claim 1, wherein the processor includes a central processing unit, CPU, including at least one processing core, and the coprocessor includes a graphics processing unit, GPU, a processing accelerator, a field-programmable gate array, FPGA, or an application-specific integrated circuit, ASIC.

4. The processing system of claim 1, wherein the workloads identified by the at least one launch request are scheduled to execute during a subsequent timing window after the pendency of the timing window in which the one or more tasks are being executed on the processor, and/or during a subsequent data frame boundary of the processor.

5. The processing system of claim 1, wherein the coprocessor scheduling policy includes a preemption policy that defines a coupled coprocessor scheduling where one or more workloads scheduled for execution or currently being executed on the coprocessor are configured to be preempted by one or more workloads queued to be executed based on the order of priority.

6. The processing system of claim 5, wherein the one or more workloads currently being executed on the coprocessor are configured to be preempted by one or more higher priority workloads queued to be executed, and wherein the coprocessor is configured to:
store the one or more workloads currently being executed on the coprocessor; and
reschedule the stored one or more workloads for execution during a subsequent timing window that is after the higher priority workloads have been executed.

7. The processing system of claim 5, wherein the preemption policy defines at least one of:
a coupled coprocessor scheduling where one or more workloads currently executed on the coprocessor are configured to be completed and a subsequent workload queued for execution is preempted by a higher priority workload;
a coupled coprocessor scheduling where one or more workloads currently being executed on the coprocessor are configured to be preempted by a higher priority workload;
a coupled coprocessor scheduling where one or more workloads currently being executed on the coprocessor are configured to be preempted by a higher priority workload, wherein the one or more workloads include an indicator that identifies a portion of a respective workload that has been already executed, and wherein the one or more workloads are configured to be stored and re-executed starting at the indicator; or
a coupled coprocessor scheduling where the one or more workloads scheduled for execution are partitioned into a plurality of sub-portions and each of the plurality of sub-portions are configured to be preempted by a higher priority workload.

8. The processing system of claim 1, wherein the processing engine includes a computing engine, a rendering engine, or an artificial intelligence, AI, inference engine, and
wherein the processing engine scheduler includes a computing engine scheduler, a rendering engine scheduler, or an inference engine scheduler.

9. A method, comprising:
receiving one or more workload launch requests from one or more tasks executing on a processor, wherein the one or more workload launch requests include one or more workloads configured for execution on a coprocessor;
generating at least one launch request in response to the one or more workload launch requests based on a coprocessor scheduling policy;
scheduling one or more workloads identified in the at least one launch request for execution on the coprocessor based on the coprocessor scheduling policy by at least one of:
a tightly-coupled coprocessor scheduling where workloads identified by the at least one launch request are scheduled to immediately execute on the coprocessor within time of a timing window in which the one or more tasks are being executed on the processor.

10. The method of claim 9, comprising preempting at least one workload scheduled for execution or currently executed on the coprocessor by one or more workloads queued to be executed based on the order of priority.

## Patentansprüche

1. Verarbeitungssystem, umfassend:
einen Prozessor;
einen Coprozessor, der dazu konfiguriert ist, eine Verarbeitungs-Engine zu implementieren;
einen Verarbeitungs-Engine-Zeitplaner, der dazu konfiguriert ist, Arbeitslasten zur Ausführung auf dem Coprozessor zeitlich zu planen;
wobei der Verarbeitungs-Engine-Zeitplaner dazu konfiguriert ist, eine oder mehrere Arbeitslaststartanfragen von einer oder mehreren auf dem Prozessor ausgeführten Aufgaben zu empfangen und als Antwort darauf mindestens eine Startanfrage zur Übergabe an den Coprozessor basierend auf einer Coprozessor-Zeitplanungsrichtlinie zu generieren;
wobei der Verarbeitungs-Engine-Zeitplaner basierend auf der Coprozessor-Zeitplanungsrichtlinie auswählt, welche Coprozessor-Cluster aktiviert werden, um durch eine Warteschlange identifizierte Arbeitslasten basierend auf der mindestens einen Startanfrage auszuführen; und
wobei die Coprozessor-Zeitplanungsrichtlinie mindestens definiert:
eng gekoppelte Coprozessor-Zeitplanung, wobei die durch die mindestens eine Startanfrage identifizierten Arbeitslasten zeitlich so geplant werden, dass sie unverzüglich auf dem Coprozessor innerhalb eines Zeitfensters ausgeführt werden, in dem die eine oder mehreren Aufgaben auf dem Prozessor ausgeführt werden.

2. Verarbeitungssystem nach Anspruch 1, wobei die Coprozessor-Zeitplanungsrichtlinie eine lose gekoppelte Coprozessor-Zeitplanung definiert, wobei die durch die mindestens eine Startanfrage identifizierten Arbeitslasten zeitlich so geplant werden, dass sie unabhängig von einem Zeitfenster der einen oder mehreren auf dem Prozessor ausgeführten Aufgaben und basierend auf einer Prioritätsreihenfolge der Arbeitslasten ausgeführt werden.

3. Verarbeitungssystem nach Anspruch 1, wobei der Prozessor eine Zentralverarbeitungseinheit, CPU, beinhaltet, die mindestens einen Verarbeitungskern beinhaltet, und der Coprozessor eine Grafikverarbeitungseinheit, GPU, einen Verarbeitungsbeschleuniger, ein feldprogrammierbares Gate-Array, FPGA, oder eine anwendungsspezifische integrierte Schaltung, ASIC, beinhaltet.

4. Verarbeitungssystem nach Anspruch 1, wobei die durch die mindestens eine Startanfrage identifizierten Arbeitslasten zeitlich so geplant werden, dass sie während eines nachfolgenden Zeitfensters nach Ablauf des Zeitfensters, in dem die eine oder mehreren Aufgaben auf dem Prozessor ausgeführt werden, und/oder während einer nachfolgenden Datenrahmengrenze des Prozessors ausgeführt werden.

5. Verarbeitungssystem nach Anspruch 1, wobei die Coprozessor-Zeitplanungsrichtlinie eine Verdrängungsrichtlinie beinhaltet, die eine gekoppelte Coprozessor-Zeitplanung definiert, wobei eine oder mehrere Arbeitslasten, die zur Ausführung zeitlich geplant sind oder derzeit auf dem Coprozessor ausgeführt werden, dazu konfiguriert sind, durch eine oder mehrere Arbeitslasten, die zur Ausführung in einer Warteschlange stehen, basierend auf der Prioritätsreihenfolge verdrängt zu werden.

6. Verarbeitungssystem nach Anspruch 5, wobei die eine oder mehreren Arbeitslasten, die derzeit auf dem Coprozessor ausgeführt werden, dazu konfiguriert sind, durch eine oder mehrere Arbeitslasten mit höherer Priorität, die zur Ausführung in der Warteschlange stehen, verdrängt zu werden, und wobei der Coprozessor dazu konfiguriert ist:
die eine oder mehreren Arbeitslasten, die derzeit auf dem Coprozessor ausgeführt werden, zu speichern; und
die eine oder mehreren gespeicherten Arbeitslasten zur Ausführung während eines nachfolgenden Zeitfensters, das nach der Ausführung der Arbeitslasten mit höherer Priorität liegt, zeitlich neu zu planen.

7. Verarbeitungssystem nach Anspruch 5, wobei die Verdrängungsrichtlinie mindestens eines von Folgendem definiert:
einer gekoppelten Coprozessor-Zeitplanung, wobei eine oder mehrere derzeit auf dem Coprozessor ausgeführte Arbeitslasten dazu konfiguriert sind, abgeschlossen zu werden, und eine nachfolgende, zur Ausführung in der Warteschlange stehende Arbeitslast durch eine Arbeitslast mit höherer Priorität verdrängt wird;
einer gekoppelten Coprozessor-Zeitplanung, wobei eine oder mehrere derzeit auf dem Coprozessor ausgeführte Arbeitslasten dazu konfiguriert sind, durch eine Arbeitslast mit höherer Priorität verdrängt zu werden;
einer gekoppelten Coprozessor-Zeitplanung, wobei eine oder mehrere derzeit auf dem Coprozessor ausgeführte Arbeitslasten dazu konfiguriert sind, durch eine Arbeitslast mit höherer Priorität verdrängt zu werden, wobei die eine oder mehreren Arbeitslasten einen Indikator beinhalten, der einen bereits ausgeführten Abschnitt einer jeweiligen Arbeitslast identifiziert, und wobei die eine oder mehreren Arbeitslasten dazu konfiguriert sind, gespeichert und beginnend bei dem Indikator erneut ausgeführt zu werden; oder
einer gekoppelten Coprozessor-Zeitplanung, wobei die eine oder mehreren Arbeitslasten, die zur Ausführung zeitlich geplant sind, in eine Mehrzahl von Unterabschnitten unterteilt sind und jeder der Mehrzahl von Unterabschnitten dazu konfiguriert ist, durch eine Arbeitslast mit höherer Priorität verdrängt zu werden.

8. Verarbeitungssystem nach Anspruch 1, wobei die Verarbeitungs-Engine eine Rechen-Engine, eine Rendering-Engine oder eine Inferenz-Engine für künstliche Intelligenz, KI, beinhaltet und wobei der Verarbeitungs-Engine-Zeitplaner einen Rechen-Engine-Zeitplaner, einen Rendering-Engine-Zeitplaner oder einen Inferenz-Engine-Zeitplaner beinhaltet.

9. Verfahren, umfassend:
Empfangen einer oder mehrerer Arbeitslaststartanfragen von einer oder mehreren Aufgaben, die auf einem Prozessor ausgeführt werden, wobei die eine oder mehreren Arbeitslaststartanfragen eine oder mehrere Arbeitslasten beinhalten, die zur Ausführung auf einem Coprozessor konfiguriert sind;
Generieren von mindestens einer Startanfrage als Antwort auf die eine oder mehreren Arbeitslaststartanfragen basierend auf einer Coprozessor-Zeitplanungsrichtlinie;
Zeitliches Planen einer oder mehrerer Arbeitslasten, die in der mindestens einen Startanfrage identifiziert wurden, um sie auf dem Coprozessor auszuführen, basierend auf der Coprozessor-Zeitplanungsrichtlinie durch mindestens eines von:
einer eng gekoppelten Coprozessor-Zeitplanung, wobei die durch die mindestens eine Startanfrage identifizierten Arbeitslasten zeitlich so geplant werden, dass sie unverzüglich auf dem Coprozessor innerhalb eines Zeitfensters ausgeführt werden, in dem die eine oder mehreren Aufgaben auf dem Prozessor ausgeführt werden.

10. Verfahren nach Anspruch 9, das Verdrängen von mindestens einer Arbeitslast, die zur Ausführung zeitlich geplant ist oder derzeit auf dem Coprozessor ausgeführt wird, durch eine oder mehrere Arbeitslasten umfasst, die zur Ausführung basierend auf ihrer Prioritätsreihenfolge in einer Warteschlange stehen.

## Revendications

1. Système de traitement comprenant :
un processeur ;
un coprocesseur configuré pour mettre en œuvre un moteur de traitement ;
un planificateur de moteur de traitement configuré pour planifier des charges de travail destinées à être exécutées sur le coprocesseur ;
dans lequel le planificateur de moteur de traitement est configuré pour recevoir une ou plusieurs demandes de lancement de charges de travail à partir d'une ou plusieurs tâches s'exécutant sur le processeur, et en réponse générer au moins une demande de lancement destinée à être soumise au coprocesseur sur la base d'une politique de planification de coprocesseur ;
dans lequel sur la base de la politique de planification de coprocesseur, le planificateur de moteur de traitement sélectionne les groupes de coprocesseurs à activer pour exécuter des charges de travail identifiées par une file d'attente sur la base de l'au moins une demande de lancement ; et
dans lequel la politique de planification de coprocesseur définit au moins :
une planification de coprocesseur à couplage étroit où des charges de travail identifiées par l'au moins une demande de lancement sont planifiées pour s'exécuter immédiatement sur le coprocesseur dans un délai d'une fenêtre temporelle dans laquelle les une ou plusieurs tâches sont en train d'être exécutées sur le processeur.

2. Système de traitement selon la revendication 1, dans lequel la politique de planification de coprocesseur définit une planification de coprocesseur à couplage lâche où des charges de travail identifiées par l'au moins une demande de lancement sont planifiées pour s'exécuter indépendamment d'une fenêtre temporelle des une ou plusieurs tâches s'exécutant sur le processeur et sur la base d'un ordre de priorité des charges de travail.

3. Système de traitement selon la revendication 1, dans lequel le processeur inclut une unité centrale, CPU, incluant au moins un cœur de traitement, et le coprocesseur inclut une unité de traitement graphique, GPU, un accélérateur de traitement, un réseau de portes logiques programmables sur le terrain, FPGA, ou un circuit intégré spécifique à une application, ASIC.

4. Système de traitement selon la revendication 1, dans lequel les charges de travail identifiées par l'au moins une demande de lancement sont planifiées pour s'exécuter pendant une fenêtre temporelle suivante après l'expiration de la fenêtre temporelle dans laquelle les une ou plusieurs tâches sont en train d'être exécutées sur le processeur, et/ou pendant une limite de trame de données suivante du processeur.

5. Système de traitement selon la revendication 1, dans lequel la politique de planification de coprocesseur inclut une politique de préemption qui définit une planification de coprocesseur couplée où une ou plusieurs charges de travail planifiées pour exécution ou étant actuellement exécutées sur le coprocesseur sont configurées pour être préemptées par une ou plusieurs charges de travail mises en file d'attente pour être exécutées sur la base de l'ordre de priorité.

6. Système de traitement selon la revendication 5, dans lequel les une ou plusieurs charges de travail étant en cours d'exécution sur le coprocesseur sont configurées pour être préemptées par une ou plusieurs charges de travail de priorité plus élevée mises en file d'attente pour être exécutées, et dans lequel le coprocesseur est configuré pour :
stocker les une ou plusieurs charges de travail étant en cours d'exécution sur le coprocesseur ; et
replanifier les une ou plusieurs charges de travail stockées destinées à être exécutées pendant une fenêtre temporelle suivante qui est postérieure à l'exécution des charges de travail de priorité plus élevée.

7. Système de traitement selon la revendication 5, dans lequel la politique de préemption définit au moins une parmi :
une planification de coprocesseur couplée où une ou plusieurs charges de travail en cours d'exécution sur le coprocesseur sont configurées pour être achevées et une charge de travail suivante mise en file d'attente pour exécution est préemptée par une charge de travail de priorité plus élevée ;
une planification de coprocesseur couplée où une ou plusieurs charges de travail en cours d'exécution sur le coprocesseur sont configurées pour être préemptées par une charge de travail de priorité plus élevée ;
une planification de coprocesseur couplée où une ou plusieurs charges de travail en cours d'exécution sur le coprocesseur sont configurées pour être préemptées par une charge de travail de priorité plus élevée, dans lequel les une ou plusieurs charges de travail incluent un indicateur qui identifie une partie d'une charge de travail respective qui a déjà été exécutée, et dans lequel les une ou plusieurs charges de travail sont configurées pour être stockées et réexécutées en commençant au niveau de l'indicateur ; ou
une planification de coprocesseur couplée où les une ou plusieurs charges de travail planifiées pour exécution sont partitionnées en une pluralité de sous-parties et chacune de la pluralité de sous-parties est configurée pour être préemptée par une charge de travail de priorité plus élevée.

8. Système de traitement selon la revendication 1, dans lequel le moteur de traitement inclut un moteur de calcul, un moteur de rendu ou un moteur d'inférence d'intelligence artificielle, IA, et dans lequel le planificateur de moteur de traitement inclut un planificateur de moteur de calcul, un planificateur de moteur de rendu ou un planificateur de moteur d'inférence.

9. Procédé comprenant :
la réception d'une ou plusieurs demandes de lancement de charges de travail à partir d'une ou plusieurs tâches s'exécutant sur un processeur, dans lequel les une ou plusieurs demandes de lancement de charges de travail incluent une ou plusieurs charges de travail configurées pour être exécutées sur un coprocesseur ;
la génération d'au moins une demande de lancement en réponse aux une ou plusieurs demandes de lancement de charges de travail sur la base d'une politique de planification de coprocesseur ;
la planification d'une ou plusieurs charges de travail identifiées dans l'au moins une demande de lancement pour exécution sur le coprocesseur sur la base de la politique de planification de coprocesseur par au moins l'une parmi :
une planification de coprocesseur à couplage étroit où des charges de travail identifiées par l'au moins une demande de lancement sont planifiées pour s'exécuter immédiatement sur le coprocesseur dans un délai d'une fenêtre temporelle dans laquelle les une ou plusieurs tâches sont en train d'être exécutées sur le processeur.

10. Procédé selon la revendication 9, comprenant la préemption d'au moins une charge de travail planifiée pour exécution ou en cours d'exécution sur le coprocesseur par une ou plusieurs charges de travail mises en file d'attente pour être exécutées sur la base de l'ordre de priorité.
